# EUROPEAN PATENT SPECIFICATION

(11) **EP 3 103 279 B1**
(45) Date of publication and mention of the grant of the patent: **02.05.2018**
(21) Application number: 15709358.4
(22) Date of filing: 03.02.2015
(51) Int. Cl.: H04W 28/06, H04W 28/02

(54) **MTC DEVICE, SERVING NODE, AND VARIOUS METHODS FOR IMPLEMENTING AN UPLINK STACK REDUCTION FEATURE**
MTC-VORRICHTUNG, VERSORGENDER KNOTEN UND VERSCHIEDENE VERFAHREN ZUR IMPLEMENTIERUNG EINER UPLINK-STAPELREDUKTIONSFUNKTION
DISPOSITIF DE COMMUNICATION DU TYPE MACHINE (MTC), NOEUD DE DESSERTE ET DIFFÉRENTS PROCÉDÉS POUR METTRE EN OEUVRE UNE FONCTION DE RÉDUCTION DE PILE DE LIAISON MONTANTE

(30) Priority: 07.02.2014 US 201461937283 P; 02.02.2015 US 201514611894
(43) Date of publication of application: 14.12.2016
(73) Proprietor: Telefonaktiebolaget LM Ericsson (publ), 164 83 Stockholm (SE)
(72) Inventor: DIACHINA, John Walter, Garner, North Carolina 27529 (US); JOHANSSON, Nicklas, S-590 45 Brokind (SE); BALLAKUR, Ravitej, Bangalore 560077 (IN); SCHLIWA-BERTLING, Paul, S-590 71 Ljungsbro (SE)
(74) Representative: Ericsson
(86) International application number: PCT/IB2015/050815
(87) International publication number: WO 2015/118445

(56) References cited:
- US-A1- 2009 109 924
- US-A1- 2011 274 042
- US-A1- 2012 182 934

## Description

### RELATED APPLICATION

This application is related to the co-assigned U.S. Patent Application Serial No. 14/611,439 entitled "MTC Device, Serving Node, and Various Methods for Implementing a Downlink Stack Reduction Feature".

### TECHNICAL FIELD

The present disclosure relates to a machine type communications (MTC) device, a serving node (e.g. SGSN), and various methods for implementing an uplink stack reduction (USR) feature. The USR feature reduces the ratio of UDP/IP overhead to MTC data packet payload in MTC communications which will serve to substantially minimize the amount of radio interface bandwidth consumed and therefore significantly improve the Packet Data Channel (PDCH) utilization within the telecommunication network.

### BACKGROUND

The following abbreviations are herewith defined, at least some of which are referred to within the following description of the prior art and the present invention.
- 3GPP: Third Generation Partnership Project
- ASIC: Application-Specific Integrated Circuit
- BSS: Base Station Subsystem
- CRC: Cyclic Redundancy Check
- EPROM: Erasable Programmable Read Only Memory
- EEPROM: Electrically Erasable Programmable Read-Only Memory
- FPGA: Field-Programmable Gate Array
- GGSN: Gateway GPRS Support Node
- GPRS: General Packet Radio Service
- GSM: Global System for Mobile Communications
- IE: Information Element
- IP: Internet Protocol
- LLC: Logical Link Control
- LTE: Long Term Evolution
- MS: Mobile Station
- MTC: Machine Type Communications
- NAS: Non-Access Stratum
- N-PDU: Network-Protocol Data Unit
- NSAPI: Network Service Access Point Identifier
- PCOMP: Protocol Control Information Compression Algorithm
- PDCH: Packet Data Channel
- PDU: Protocol Data Unit
- PS: Packet Switched
- RAM: Random Access Memory
- ROM: Read Only Memory
- SAPI: Service Access Point Identifier
- SGSN: Serving GPRS Support Node
- SNDCP: Subnetwork Dependent Convergence Protocol
- SN-PDU: Sub Network-Protocol Data Unit
- TCP: Transmission Control Protocol
- UDP: User Datagram Protocol
- UE: User Equipment
- UMTS: Universal Mobile Telecommunications System
- UI: User Information
- USR: Uplink Stack Reduction
- XID: exchange IDentifier

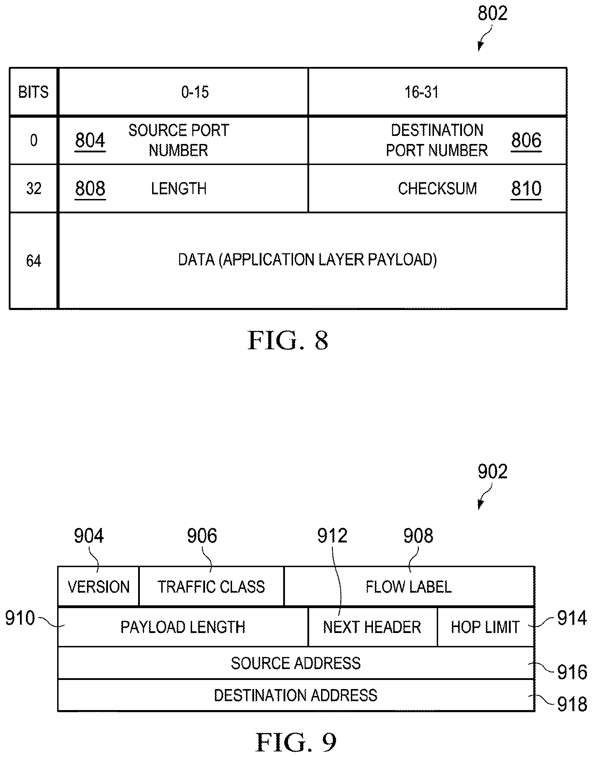

Machine Type Communications (MTC) involve the transmission of MTC data packets which are anticipated to contain a small amount of application payload (e.g. 100 octets) which, when sent from a MTC device, will also typically be sent to the same MTC application server located in an IP network. It is also expected that such MTC data packets will be made within the context of UDP/IP datagrams where UDP adds 6 to 8 octets of overhead (see FIG. 8) to each MTC data packet and IPv6 adds 40 octets of overhead (see FIG. 9) to each MTC data packet. With 46 to 48 octets of UDP/IP overhead per MTC data packet, optimizations that allow for reducing the ratio of UDP/IP overhead to MTC data packet payload will serve to substantially minimize the amount of radio interface bandwidth consumed and therefore significantly improve the PDCH utilization within the telecommunication network. One such optimization is the subject of the present disclosure.

U.S. Patent Publication No. 2012/0182934 A1 discloses an intermediate node in a wireless communication system that transmits application layer messages between first and second nodes. To do so, the intermediate node receives a request to activate a packet data protocol (PDP) context for the first node. The request, as generated by the first node, indicates the first node is capable of using a first protocol stack that excludes one or more particular layers (UDP/IP layers) included in a second protocol stack used by the second node. The intermediate node activates a PDP context for the first node in accordance with the request. The intermediate node thereafter forwards application layer messages supported by the activated PDP context between the first node and the second node, forwarding application layer messages destined for the first node in accordance with the first protocol stack and forwarding application layer messages destined for the second node in accordance with the second protocol stack.

U.S. Patent Publication No. 2011/0274042 A1 discloses methods and techniques for reducing both signaling and data traffic related to machine-type communication devices (MTC) in a GPRS communication network. Optimized MTC messages (without UDP/IP layers) from an MTC device are transmitted using Single-Block Packet Access procedures and restored by SGSNs based on a PDP context established during the mobile station's GPRS attach procedure.

U.S. Patent Publication No. 2009/109924 A1 discloses a packet communication system having a wireless terminal, a plurality of wireless access networks, and a packet communication device connected to the respective wireless access networks. Also disclosed is a unit controlling handover processing for handover of the wireless terminal to a different wireless access network. Also disclosed is a unit checking whether a handover destination wireless access network supports a header compression or decompression method used in a first packet communication performed through a handover source wireless access network, at a time of the handover. Also disclosed is a unit controlling an execution point for processing corresponding to the header compression or decompression method to be specified at the packet communication device for a second packet communication performed through the handover destination wireless access network, when the above network does not support the method.

### SUMMARY

A MTC device, a serving node (e.g. SGSN), and various methods for implementing an uplink stack reduction (USR) feature which reduces the ratio of UDP/IP overhead to MTC data packet payload in MTC communications are described in the independent claims. Advantageous embodiments of the MTC device, the serving node (e.g. SGSN), and the various methods are further described in the dependent claims.

In one aspect, the present disclosure provides a MTC device configured to implement an USR feature with a serving node (e.g. SGSN). The MTC device comprises a processor, and at least one memory that stores processor-executable instructions, wherein the processor interfaces with the at least one memory to execute the processor-executable instructions, whereby the MTC device is operable to perform a receive operation, a first send operation, an enable operation, a store operation, and a second send operation. In the receive operation, the MTC device receives a message from the serving node when activating a PDP context with the serving node, wherein the message comprises an indication which indicates that the serving node supports the USR feature. In the first send operation, the MTC device sends a SN-PDU having a payload which comprises UDP/IP layers to the serving node, wherein the SN-PDU is associated with the PDP context with the serving node. In the enable operation, the MTC device enables the USR feature for the PDP context with the serving node. In the store operation, the MTC device stores status information indicating the USR feature is enabled for the PDP context with the serving node. In the second send operation, the MTC device sends a subsequent SN-PDU having a payload which excludes UDP/IP layers to the serving node, wherein the subsequent SN-PDU is associated with the PDP context with the serving node. The MTC device by implementing the USR feature reduces the ratio of UDP/IP overhead to MTC data packet payload in MTC communications which will serve to substantially minimize the amount of radio interface bandwidth consumed and therefore significantly improve the PDCH utilization within the telecommunication network.

In one aspect, the present disclosure provides a method in a MTC device for implementing an USR feature with a serving node (e.g. SGSN). The method comprises a receiving operation, a first sending operation, an enabling operation, a storing operation, and a second sending operation. In the receiving operation, the MTC device receives a message from the serving node when activating a PDP context with the serving node, wherein the message comprises an indication which indicates that the serving node supports the USR feature. In the first sending operation, the MTC device sends a SN-PDU having a payload which comprises UDP/IP layers to the serving node, wherein the SN-PDU is associated with the PDP context with the serving node. In the enabling operation, the MTC device enables the USR feature for the PDP context with the serving node. In the storing operation, the MTC device stores status information indicating the USR feature is enabled for the PDP context with the serving node. In the second sending operation, the MTC device sends a subsequent SN-PDU having a payload which excludes UDP/IP layers to the serving node, wherein the subsequent SN-PDU is associated with the PDP context with the serving node. The method in the MTC device for implementing the USR feature reduces the ratio of UDP/IP overhead to MTC data packet payload in MTC communications which will serve to substantially minimize the amount of radio interface bandwidth consumed and therefore significantly improve the PDCH utilization within the telecommunication network

In yet another aspect, the present disclosure provides a serving node (e.g., SGSN) configured to implement an USR feature with a MTC device. The serving node comprises at least one processor, and at least one memory that stores processor-executable instructions, wherein the at least one processor interfaces with the at least one memory to execute the processor-executable instructions, whereby the serving node is operable to perform a send operation, a first receive operation, an enable and store operation, a second receive operation, and a re-generate operation. In the send operation, the serving node sends a message to the MTC device when activating a PDP context with the MTC device, wherein the message comprises an indication which indicates that the serving node supports the USR feature. In the receive operation, the serving node receives a SN-PDU having a payload which comprises UDP/IP layers from the MTC device, wherein the SN-PDU is associated with the PDP context with the MTC device. In the enable and store operations, the serving node upon receipt of the SN-PDU enables the USR feature for the PDP context with the MTC device and stores information about the UDP/IP layers within the received SN-PDU. In the second receive operation, the serving node receives from the MTC device a subsequent SN-PDU having an indicator indicating that UDP/IP layers are excluded from a payload therein, wherein the subsequent SN-PDU is associated with the PDP context with the MTC device. In the re-generate operation, the serving node upon receipt of the subsequent SN-PDU, re-generates UDP/IP layers associated with the subsequent SN-PDU using the stored information to create a N-PDU comprising the re-generated UDP/IP layers and the payload of the subsequent SN-PDU. The serving node by implementing the USR feature reduces the ratio of UDP/IP overhead to MTC data packet payload in MTC communications which will serve to substantially minimize the amount of radio interface bandwidth consumed and therefore significantly improve the PDCH utilization within the telecommunication network

In still yet another aspect, the present disclosure provides a method in a serving node (e.g., SGSN) configured to implement an USR feature with a MTC device. The method comprises a sending operation, a first receiving operation, an enabling and storing operation, a second receiving operation, and a re-generating operation. In the sending operation, the serving node sends a message to the MTC device when activating a PDP context with the MTC device, wherein the message comprises an indication which indicates that the serving node supports the USR feature. In the receiving operation, the serving node receives a SN-PDU having a payload which comprises UDP/IP layers from the MTC device, wherein the SN-PDU is associated with the PDP context with the MTC device. In the enabling and storing operations, the serving node upon receipt of the SN-PDU enables the USR feature for the PDP context with the MTC device and stores information about the UDP/IP layers within the received SN-PDU. In the second receiving operation, the serving node receives from the MTC device a subsequent SN-PDU having an indicator indicating that UDP/IP layers are excluded from a payload therein, wherein the subsequent SN-PDU is associated with the PDP context with the MTC device. In the re-generating operation, the serving node upon receipt of the subsequent SN-PDU, re-generates UDP/IP layers associated with the subsequent SN-PDU using the stored information to create a N-PDU comprising the re-generated UDP/IP layers and the payload of the subsequent SN-PDU. The method in the serving node by implementing the USR feature reduces the ratio of UDP/IP overhead to MTC data packet payload in MTC communications which will serve to substantially minimize the amount of radio interface bandwidth consumed and therefore significantly improve the PDCH utilization within the telecommunication network.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

A more complete understanding of the present invention may be obtained by reference to
the following detailed description when taken in conjunction with the accompanying drawings:
FIGURES 1A-1B is a diagram illustrating the signaling between a MTC device (e.g., MS), a serving node (e.g. SGSN) and a target serving node (e.g. target SGSN) to implement the USR feature in accordance with an embodiment of the present disclosure;
FIGURE 2 is a flowchart of a method in the MTC device (e.g., MS) for implementing the USR feature in accordance with an embodiment of the present disclosure;
FIGURE 3 is a flowchart of a method in the serving node (e.g. SGSN) for implementing the USR feature in accordance with an embodiment of the present disclosure;
FIGURE 4 is a flowchart of a method in the target serving node (e.g. target SGSN) for implementing the USR feature in accordance with an embodiment of the present disclosure;
FIGURE 5 is a schematic view of the MTC device (e.g., MS), the serving node (e.g. SGSN) and the target serving node (e.g. target SGSN) which are configured to implement the USR feature and the various methods in accordance with different embodiments of the present disclosure;
FIGURE 6 is a diagram of an exemplary Packet Flow Identifier IE within a PDP Context related NAS message which indicates that the serving node (e.g., SGSN) supports the USR feature and is sent from the serving node (e.g., SGSN) to the MTC device in accordance with an embodiment of the present disclosure;
FIGURE 7 is a more detail diagram illustrating the exemplary Packet Flow Identifier IE of FIGURE 6 in accordance with an embodiment of the present disclosure;
FIGURE 8 is a diagram of an UDP header and data field; and,
FIGURE 9 is a diagram of an IPv6 header.

### DETAILED DESCRIPTION

The present disclosure describes one possible optimization for reducing the ratio of UDP/IP overhead to MTC data packet payload in MTC communications which will serve to substantially minimize the amount of radio interface bandwidth consumed and therefore significantly improve the PDCH utilization within the wireless telecommunication network. This optimization which is referred to herein as the Uplink Stack Reduction (USR) feature takes advantage of the high degree that MTC data packets which have fields comprising UDP/IP layers will remain the same when considering the successive MTC data packets which are sent from a given MTC device to the same MTC application server located in an IP network. This consistency in the content of the UDP/IP layers allows for using the USR feature wherein a serving node (e.g. SGSN) retains knowledge of the UDP/IP layers whenever present in the SN-PDU payload corresponding to a given PDP context. This allows the MTC device to exclude UDP/IP layers from the protocol stack of the SN-PDU payload when transmitting subsequent uplink SN-PDUs for that PDP context to the serving node (e.g. SGSN) since the applicable UDP/IP layers will already be known by the serving node (e.g. SGSN). Although the USR feature is described herein based on a wireless telecommunication system which utilizes the GSM radio interface it should be appreciated that the USR feature may be applied in the context of other radio interfaces based on other standards such as, for example, LTE and UMTS.

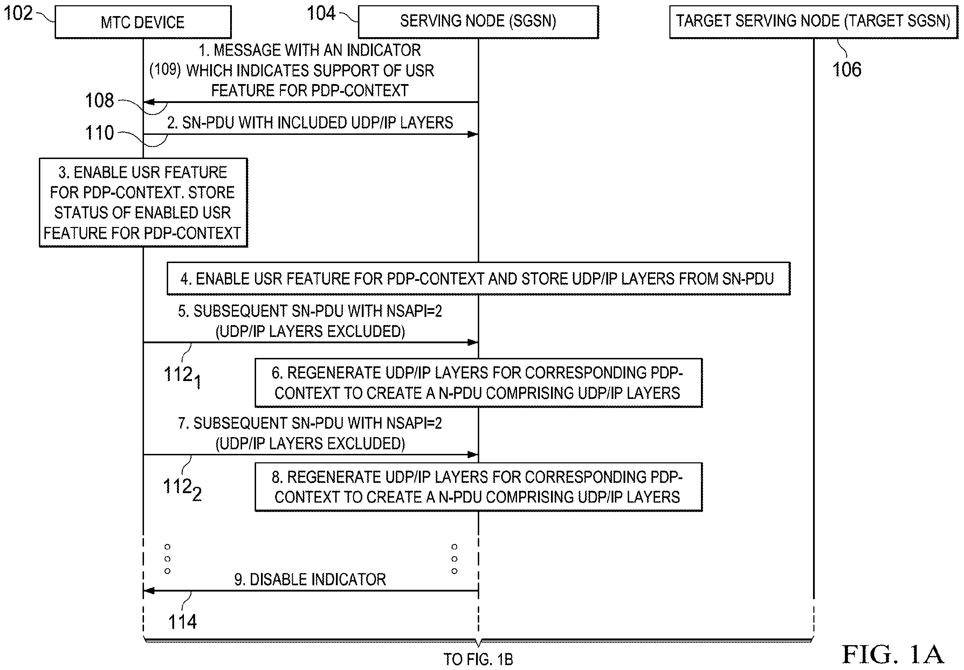

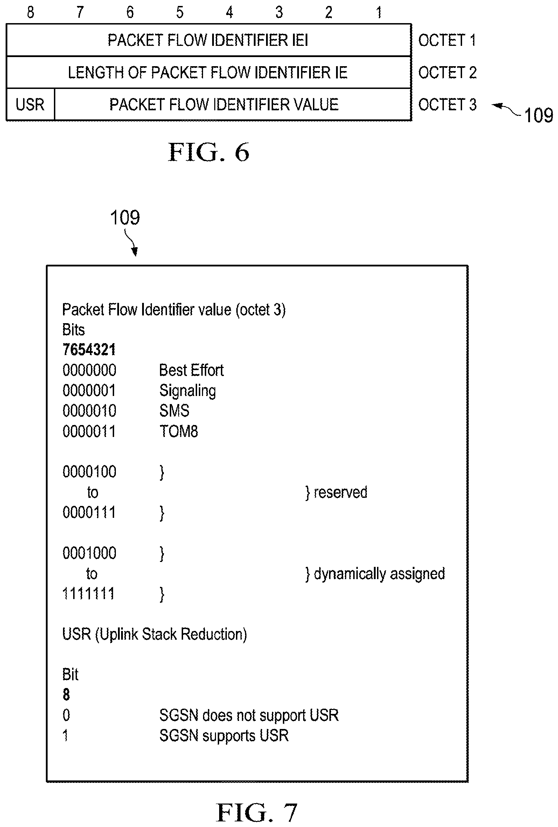

Referring to FIGURES 1A-1B, there is a diagram illustrating the signaling between a MTC device 102 (e.g., MS 102), a serving node 104 (e.g. SGSN 104) and a target serving node 106 (e.g. target SGSN 106) to implement the USR feature in accordance with an embodiment of the present disclosure. In this exemplary signaling diagram, the three main components namely the MTC device 102 (e.g., MS 102), the serving node 104 (e.g. SGSN 104), and the target serving node 106 (e.g. target SGSN 106) are shown interacting with one another when implementing the new USR feature as follows:
1. The SGSN 104 sends a message 108 to the MTC device 102 when activating a PDP context with the MTC device 102. The message 108 (e.g. NAS message 108-see FIGS. 6-7) comprises an indication 109 which indicates that the SGSN 104 supports the USR feature. For instance, the message 108 can be a PDP context related NAS message 108 which comprises a packet flow identifier information element containing the indication 109 indicating that the SGSN 104 supports the USR feature (see FIGS. 6-7).
2. The MTC device 102 sends a SN-PDU 110 associated with the PDP context to the SGSN 104. The SN-PDU 110 has a payload which comprises the UDP/IP layers (see FIGS. 8-9).
3. The MTC device 102 enables the USR feature for the PDP context with the SGSN 104 and stores status information indicating the USR feature is enabled for the PDP context with the SGSN 104. Note: if an inter-SGSN PS Handover is performed then the MTC device 102 will be informed during the handover related signaling with the serving SGSN about whether it should consider USR to be enabled in the new cell. In addition, when changing cells due to cell re-selection (i.e., not PS handover), the MTC device 102 retains the USR status information for as long as it remains in a cell within the same Routing Area as it was when it last performed a Routing Area Update.
4. Upon receiving the SN-PDU 110, the SGSN 104 enables the USR feature for the PDP context with the MTC device 102 and stores information about the UDP/IP layers within the received SN-PDU 110. Note: the SGSN 104 can store the information about the UDP/IP layers from the received SN-PDU 110 for as long as the PDP context with the MTC device 102 is retained.
5. The MTC device 102 sends a subsequent SN-PDU 112₁ associated with the PDP context to the SGSN 104. The subsequent SN-PDU 112₁ has a payload which does not have UDP/IP layers.
6. Upon receiving the subsequent SN-PDU 112₁, the SGSN 104 re-generates the UDP/IP layers associated with the subsequent SN-PDU 112₁ using the stored information from step 4 to create a N-PDU comprising the re-generated UDP/IP layers and the payload from the subsequent SN-PDU 112₁.
7. The MTC device 102 sends a subsequent SN-PDU 112₂ associated with the PDP context to the SGSN 104. The subsequent SN-PDU 112₂ has a payload which does not have UDP/IP layers. Note: the MTC device 102 could send any number of subsequent SN-PDUs 112₃, 112₄... 112ₓ which have payloads that do not have UDP/IP layers associated with the PDP context to the SGSN 104.
8. Upon receiving the subsequent SN-PDU 112₂, the SGSN 104 re-generates the UDP/IP layers associated with the subsequent SN-PDU 112₂ using the stored information from step 4 to create a N-PDU comprising the re-generated UDP/IP layers and the payload from the subsequent SN-PDU 112₂. Note: the SGSN 104 could receive any number of subsequent SN-PDUs 112₃, 112₄...112ₓ and re-generate the UDP/IP layers associated with the subsequent SN-PDUs 112₃, 112₄...112ₓ using the stored information from step 4 to create N-PDUs comprising the re-generated UDP/IP layers and the payloads from the respective subsequent SN-PDUs 112₃, 112₄... 112ₓ.
9. At some point in time, the SGSN 104 can send a disable indicator 114 to the MTC device 102. The disable indicator 114 comprises an indication which indicates that the USR feature is disabled for the PDP context with the SGSN 104. For example, this point in time can be when an inter-SGSN PS handover is performed where the disable indicator 114 can be part of the PS Handover related signaling information relayed from the serving SGSN to the MTC device 102. Another is example is where the serving SGSN experiences a memory issue and determines that it can no longer buffer the PDP Context specific information about the UDP/IP layers for one or more MTC devices 102.
   The following steps 10-20 describe how the MTC device 102 can initiate a RAU procedure with the target SGSN 106 and implement the USR feature in accordance with an embodiment of the present disclosure.
10. At some point in time, assume the MTC device 102 decides to perform a RAU procedure with the target SGSN 106 at which point the MTC device 102 would consider the USR feature to be disabled for the PDP context with the target SGSN 106. For instance, the MTC device 102 may decide to perform the RAU procedure when it is in idle mode and performs a cell change to a cell in a new routing area associated with the target SGSN 106 in which case the MTC device 102 will not know if the new SGSN 106 supports the USR feature.
11. The MTC device 102 sends a RAU request message 116 to the target SGSN 106.
12. Upon receiving the RAU request message 116, the target SGSN 106 sends a RAU accept message 118 to the MTC device 102. The RAU accept message 118 comprises an indication which indicates that the target SGSN 106 supports the USR feature for the PDP context with the MTC device 102. Note: the target SGSN 106 will wait for the MTC device 102 to send it a RAU complete message (in response to the MTC device 102 receiving the RAU accept message 118) before the target SGSN 106 considers the PDP Context to be enabled.
13. The MTC device 102 sends a SN-PDU 120 associated with the PDP context to the target SGSN 106. The SN-PDU 120 has a payload which comprises the UDP/IP layers (see FIGS. 8-9).
14. The MTC device 102 enables the USR feature for the PDP context with the target SGSN 106 and stores status information indicating the USR feature is enabled for the PDP context with the target SGSN 106. Note: if an inter-SGSN PS Handover is performed then the MTC device 102 will be informed during the handover related signaling with the serving SGSN about whether it should consider USR to be enabled in the new cell. In addition, when changing cells due to cell re-selection (i.e., not PS handover), the MTC device 102 retains the USR status information for as long as it remains in a cell within the same Routing Area as it was when it last performed a Routing Area Update.
15. Upon receiving the SN-PDU 120, the target SGSN 164 enables the USR feature for the PDP context with the MTC device 102 and stores information about the UDP/IP layers within the received SN-PDU 120. Note: the target SGSN 106 can store the information about the UDP/IP layers from the received SN-PDU 110 for as long as the PDP context with the MTC device 102 is retained.
16. The MTC device 102 sends a subsequent SN-PDU 122₁ associated with the PDP context to the target SGSN 106. The subsequent SN-PDU 122₁ has a payload which does not have UDP/IP layers.
17. Upon receiving the subsequent SN-PDU 122₁, the target SGSN 106 re-generates the UDP/IP layers associated with the subsequent SN-PDU 122₁ using the stored information from step 15 to create a N-PDU comprising the re-generated UDP/IP layers and the payload from the subsequent SN-PDU 122₂.
18. The MTC device 102 sends a subsequent SN-PDU 122₂ associated with the PDP context to the target SGSN 106. The subsequent SN-PDU 122₂ has a payload which does not have UDP/IP layers. Note: the MTC device 102 could send any number of subsequent SN-PDUs 122₃, 122₄... 122ₓ which have payloads that do not have UDP/IP layers associated with the PDP context to the target SGSN 106.
19. Upon receiving the subsequent SN-PDU 122₂, the target SGSN 106 re-generates the UDP/IP layers associated with the subsequent SN-PDU 122₂ using the stored information from step 15 to create a N-PDU comprising the re-generated UDP/IP layers and the payload from the subsequent SN-PDU 122₂. Note: the target SGSN 106 could receive any number of subsequent SN-PDUs 122₃, 122₄... 122ₓ and re-generate the UDP/IP layers associated with the subsequent SN-PDUs 122₃, 122₄...122ₓ using the stored information from step 15 to create N-PDUs comprising the re-generated UDP/IP layers and the payload from the respective subsequent SN-PDUs 122₃, 122₄...122ₓ.
20. At some point in time, the target SGSN 106 can send a disable indicator 124 to the MTC device 102. The disable indicator 124 comprises an indication which indicates that the USR feature is disabled for the PDP context with the target SGSN 106.

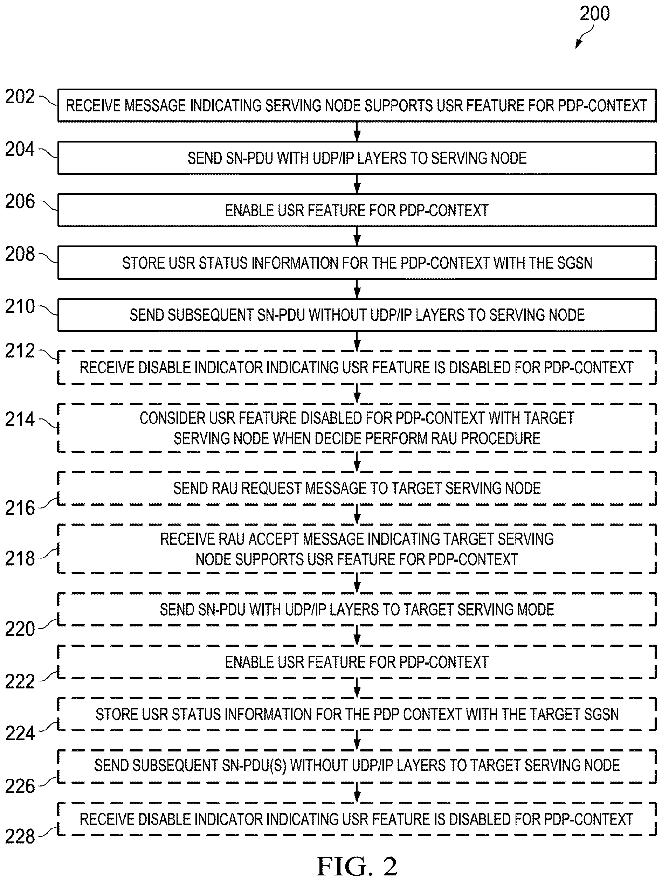

Referring to FIGURE 2, there is a flowchart of a method 200 in the MTC device 102 (e.g., MS 102) for implementing the USR feature in accordance with an embodiment of the present disclosure. At step 202, the MTC device 102 receives the message 108 from the SGSN 104 when activating a PDP context with the SGSN 104, where the message 108 comprises an indication 109 which indicates that the SGSN 104 supports the USR feature (step 1 of FIGS. 1A-1B). In one example, the message 108 is a PDP context related NAS message 108 which comprises a packet flow identifier information element which contains the indication which indicates that the SGSN 104 supports the USR feature (see FIGS. 6-7). At step 204, the MTC device 102 sends the SN-PDU 110 having a payload which includes UDP/IP layers to the SGSN 104, where the SN-PDU 110 is associated with the PDP context with the SGSN 104 (step 2 of FIGS. 1A-1B). At step 206, the MTC device 102 enables the USR feature for the PDP context with the SGSN 104 (step 3 of FIGS. 1A-1B). At step 208, the MTC device 102 stores status information indicating the USR feature is enabled for the PDP context with the SGSN 104 (step 3 of FIGS. 1A-1B). At step 210, the MTC device 102 sends a subsequent SN-PDU 112₁ having a payload which excludes UDP/IP layers to the SGSN 104, where the subsequent SN-PDU 112₁ is associated with the PDP context with the SGSN 104 (step 5 of FIGS. 1A-1B-note: the MTC device 102 can send multiple subsequent SN-PDUs 112₂, 112₃...112ₓ). In one example, the subsequent SN-PDU 112₁ comprises a header with a field (e.g., NSAPI field = 2) which indicates that the UDP/IP layers have been excluded therefrom. At step 212, the MTC device 102 may receive the disable indicator 114 from the SGSN 104, where the disable indicator 114 comprises an indication which indicates that the USR feature is disabled for the PDP context with the SGSN 104 (step 9 of FIGS. 1A-1B).

Prior to step 212, the MTC device 102 while in idle mode may perform a cell re-selection based cell change to a new cell in a new Routing Area supported by the target serving node 106 (e.g., target SGSN 106) in which case it would perform a RAU procedure and implement the USR feature per steps 214, 216, 218, 220, 222, 224, 226 and 228 described next. At step 214, the MTC device 102 upon deciding to perform a RAU procedure with the target SGSN 106 due to entering a new Routing Area would consider the USR feature to be disabled for the PDP context with the target SGSN 106 (step 10 of FIGS. 1A-1B). At step 216, the MTC device 102 sends the RAU request message 116 to the target SGSN 106 (step 11 of FIGS. 1A-1B). At step 218, the MTC device 102 receives the RAU accept message 118 from the target SGSN 106, where the RAU accept message 118 comprises an indication which indicates that the target SGSN 106 supports the USR feature (step 12 of FIGS. 1A-1B). At step 220, the MTC device 102 sends the SN-PDU 120 having a payload which includes UDP/IP layers to the target SGSN 106, where the SN-PDU 120 is associated with the PDP context with the target SGSN 106 (step 13 of FIGS. 1A-1B). At step 222, the MTC device 102 enables the USR feature for the PDP context with the target SGSN 106 (step 14 of FIGS. 1A-1B). At step 224, the MTC device 102 stores status information indicating the USR feature is enabled for the PDP context with the target SGSN 106 (step 14 of FIGS. 1A-1B). At step 226, the MTC device 102 sends a subsequent SN-PDU 122₁ having a payload which excludes UDP/IP layers to the target SGSN 106, where the subsequent SN-PDU 122₁ is associated with the PDP context with the target SGSN 106 (step 16 of FIGS. 1A-1B-note: the MTC device 102 can send multiple subsequent SN-PDUs 122₂, 122₃...122ₓ). In one example, the subsequent SN-PDU 122₁ comprises a header with a field (e.g., NSAPI field = 2) which indicates that the UDP/IP layers have been excluded therefrom. At step 228, the MTC device 102 may receive the disable indicator 124 from the target SGSN 106, where the disable indicator 124 comprises an indication which indicates that the USR feature is disabled for the PDP context with the target SGSN 106 (step 20 of FIGS. 1A-1B).

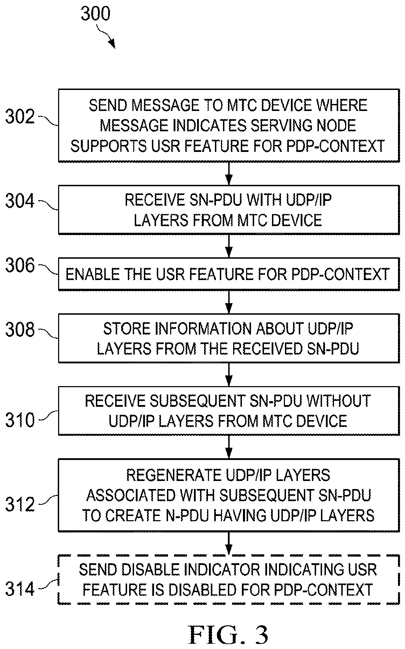

Referring to FIGURE 3, there is a flowchart of a method 300 in the serving node 104 (e.g. SGSN 104) for implementing the USR feature in accordance with an embodiment of the present disclosure. At step 302, the SGSN 104 sends the message 108 to the MTC device 102 when activating a PDP context with the MTC device 102, where the message 108 comprises an indication 109 which indicates that the SGSN 104 supports the USR feature (step 1 of FIGS. 1A-1B). In one example, the message 108 is a PDP context related NAS message 108 which comprises a packet flow identifier information element which contains the indication which indicates that the SGSN 104 supports the USR feature (see FIGS. 6-7). At step 304, the SGSN 104 receives the SN-PDU 110 having a payload which includes UDP/IP layers from the MTC device 102, where the SN-PDU 110 is associated with the PDP context with the MTC device 102 (step 3 of FIGS. 1A-1B). At step 306, the SGSN 104 upon receipt of the SN-PDU 110 enables the USR feature for the PDP context with the MTC device 102. At step 308, the SGSN 104 stores information about the UDP/IP layers within the received SN-PDU 110. In one example, the SGSN 104 stores the information about the UDP/IP layers from the received SN-PDU 110 for as long as the PDP context with the MTC device 102 is retained. At step 310, the SGSN 104 receives the subsequent SN-PDU 112₁ having a payload which excludes UDP/IP layers from the MTC device 102, where the subsequent SN-PDU 112₁ is associated with the PDP context with the MTC device 102 (step 5 of FIGS. 1A-1B). In one example, the subsequent SN-PDU 112₁ comprises a header with a field (e.g., NSAPI field = 2) which indicates that the UDP/IP layers have been excluded therefrom. At step 312, the SGSN 104 upon receipt of the subsequent SN-PDU 112₁ re-generates UDP/IP layers associated with the subsequent SN-PDU 112₁ using the stored information from step 308 to create a N-PDU comprising the re-generated UDP/IP layers and the payload from the subsequent SN-PDU 112₁ (step 8 of FIGS. 1A-1B--note the SGSN 104 can receive multiple subsequent SN-PDUs 112₂, 112₃...112ₓ and create multiple N-PDUs). At step 314, the SGSN 104 may send the disable indicator 114 to the MTC device 102, where the disable indicator 114 comprises an indication which indicates that the USR feature is disabled for the PDP context with the SGSN 104 (step 9 of FIGS. 1A-1B).

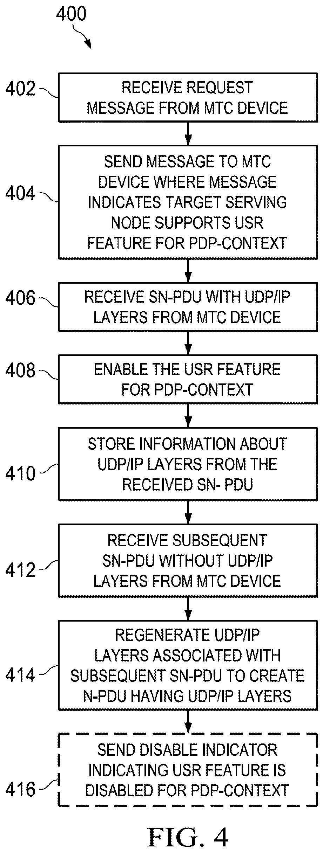

Referring to FIGURE 4, there is a flowchart of a method 400 in the target serving node 106 (e.g. target SGSN 106) for implementing the USR feature in accordance with an embodiment of the present disclosure. At step 402, the target SGSN 106 receives the RAU request message 116 from the MTC device 102 (step 11 of FIGS. 1A-1B). At step 404, the target SGSN 106 sends the RAU accept message 118 to the MTC device 102, where the RAU accept message 118 comprises an indication 109 which indicates that the target SGSN 106 supports the USR feature (step 12 of FIGS. 1A-1B). At step 406, the target SGSN 106 receives the SN-PDU 120 having a payload which includes UDP/IP layers from the MTC device 102, where the SN-PDU 120 is associated with the PDP context with the MTC device 102 (step 14 of FIGS. 1A-1B). At step 408, the target SGSN 106 upon receipt of the SN-PDU 120 enables the USR feature for the PDP context with the MTC device 102. At step 410, the target SGSN 106 stores information about the UDP/IP layers within the received SN-PDU 120. In one example, the target SGSN 106 stores the information about the UDP/IP layers from the received SN-PDU 120 for as long as the PDP context with the MTC device 102 is retained. At step 412, the target SGSN 106 receives the subsequent SN-PDU 122₁ having a payload which excludes UDP/IP layers from the MTC device 102, where the subsequent SN-PDU 122₁ is associated with the PDP context with the MTC device 102 (step 16 of FIGS. 1A-1B). In one example, the subsequent SN-PDU 122₁ comprises a header with a field (e.g., NSAPI field = 2) which indicates that the UDP/IP layers have been excluded therefrom. At step 414, the target SGSN 106 upon receipt of the subsequent SN-PDU 122₁ re-generates UDP/IP layers associated with the subsequent SN-PDU 122₁ using the stored information from step 410 to create a N-PDU comprising the re-generated UDP/IP layers and the payload from the subsequent SN-PDU 122₁ (step 17 of FIGS. 1A-1B--note the target SGSN 106 can receive multiple subsequent SN-PDUs 122₂, 122₃...122ₓ and create multiple N-PDUs). At step 416, the target SGSN 106 may send the disable indicator 124 to the MTC device 102, where the disable indicator 124 comprises an indication which indicates that the USR feature is disabled for the PDP context with the target SGSN 106 (step 19 of FIGS. 1A-1B).

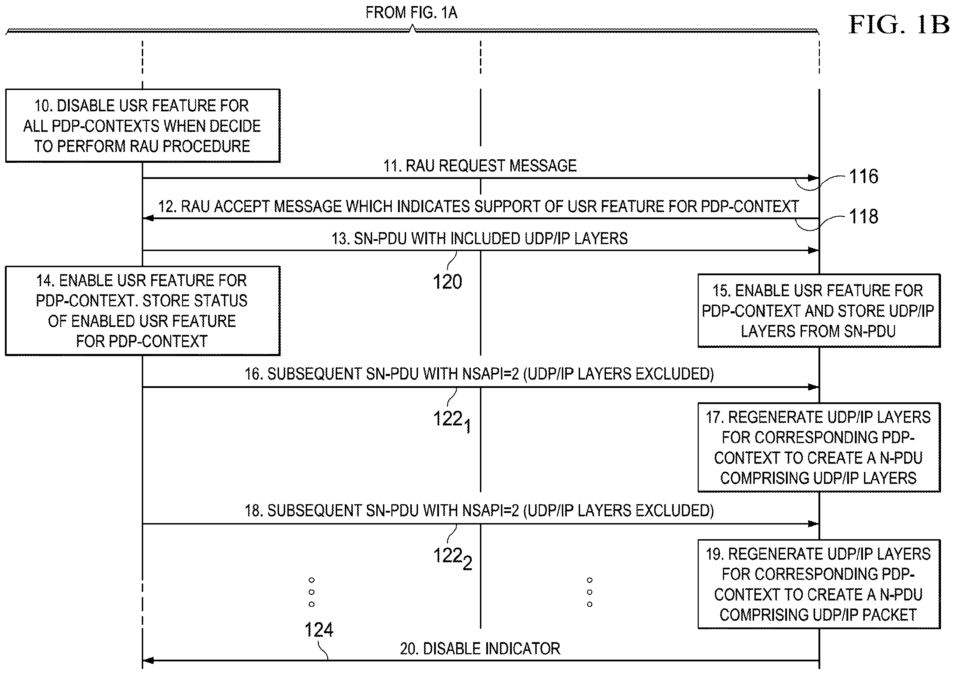

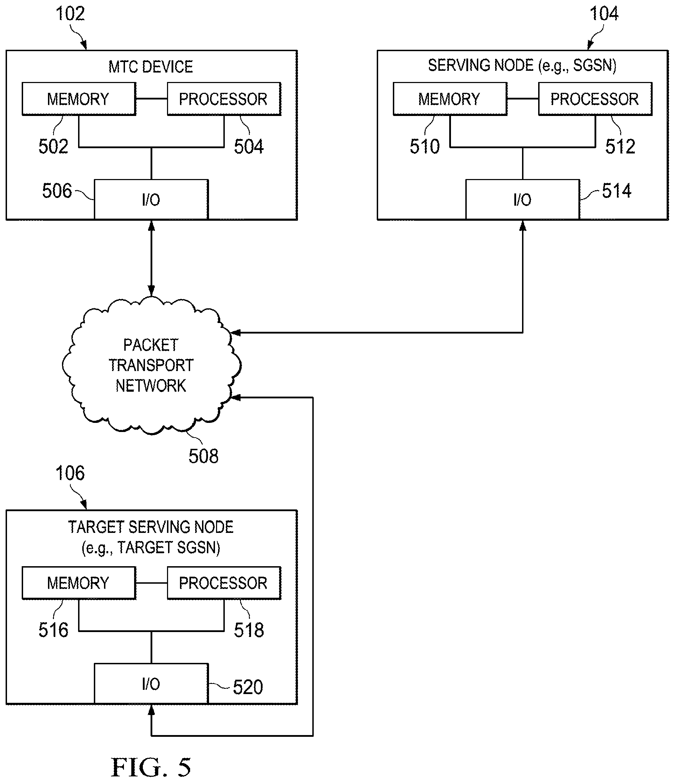

Referring to FIGURE 5, there is a schematic view of the MTC device 102 (e.g., MS 102), the serving node 104 (e.g. SGSN 104) and the target serving node 106 (e.g. target SGSN 106) which are configured to implement the USR feature and the various methods 200, 300 and 400 in accordance with different embodiments of the present disclosure. The MTC device 102 comprises a memory 502, a processor 504 for executing instructions stored in the memory 502 and an input/output device 506 for communication with other nodes and devices such as the SGSN 104 and target SGSN 106 connected to a packet transport network 508. The serving node 104 (e.g. SGSN 104) comprises a memory 510, a processor 512 suitable for executing instructions stored in the memory 510 as well as an input/output device 514 which is also connected to the packet transport network 508. Likewise, the target serving node 106 (e.g. target SGSN 106) comprises a memory 516, a processor 518 suitable for executing instructions stored in the memory 516 as well as an input/output device 520 which is also connected to the packet transport network 508. The present arrangement of the MTC device 102 (e.g., MS 102), the serving node 104 (e.g. SGSN 104) and the target serving node 106 (e.g. target SGSN 106) are suitable for executing the various methods 200, 300 and 400 described herein with respect to FIGURES 1-4.

It should be noted that the MTC device 102 (e.g., MS 102), the serving node 104 (e.g. SGSN 104) and the target serving node 106 (e.g. target SGSN 106) each comprise many other components which are well known in the art but for clarity the well known components are not described herein. Moreover, it should be noted that a typical network would comprise multiple MTC devices 102 and multiple serving nodes 104 and 106 (e.g. SGSN 104 and 106) as well as a plethora of other network nodes which may or may not be in the path of packets sent between the MTC device 102 and the serving nodes 104 and 106 (e.g. SGSN 104 and 106). As one example, a Radio Base Station, not depicted, is in radio connection with the MTC device 102, receiving packets from the MTC device 102 and forwarding them possibly through other network node(s) to one of the serving nodes 104 and 106 (e.g. SGSNs 104 and 106).

Further, it should be noted that there are many different types of memories 502, 510 and 516 available, such as solid states drives, hard drives, RAM, ROM, EPROM, EEPROM etc. which could be used in implementing embodiments disclosed herein. The memory 502 used for the MTC device 102 would typically be different from the memories 510 and 516 used for the serving nodes 104 and 106 (e.g. SGSNs 104 and 106), however there is absolutely nothing preventing them for utilizing the same kind of memory. Also, while not indicated in the schematic view, there might be multiple different memories in the devices disclosed. Typically, there would be persistent storage as well as Random Access Memory. Also the processors 504, 512 and 518 indicated in the schematic view can be implemented in many different forms, such as an off-the-shelf microcontroller, an ASIC, FPGA etc.

The following is a more detailed discussion of the USR feature with respect to the following aspects: (1) Static UDP/IP Header Information; (2) Managing a USR profile; (3) Re-Generating the UDP/IP layers; and (4) Changes to Standards to Implement USR feature.

### (1) Static UDP/IP Header Information

The PDP Context activation procedure can be used to inform the MTC device 102 when the SGSN 104 supports the USR feature for a given PDP Context. The MTC device 102 that supports USR will then realize that after sending an uplink SN-PDU 110 to such a SGSN 104 wherein the UDP/IP layers were included in the SN-PDU 110's PDU payload, that it can exclude the UDP/IP layers in all subsequent SN-PDUs 112₁, 112₂...112ₓ sent to that SGSN 104 for that PDP Context.
- This is possible since UDP/IP headers will essentially be static as the same MTC application server located in an IP network will be receiving the MTC data packets from the same MTC device 102 for as long as the corresponding PDP Context remains activated (i.e., only the content of the Data field and Length field in the UDP/IP headers will change when considering successive MTC data packets sent to the same MTC application server - see FIGURES 8-9).
- By keeping the UDP/IP layers present within the first uplink SN-PDU 110 sent after the PDP Context activation, allows the SGSN 104 a convenient way of determining the static content of the UDP/IP layers in the subsequent SN-PDUs 112₂, 112₃...122ₓ. For example, the UDP source port number applicable to the MTC device 102 will not be known at the point of completing the PDP Context activation procedure and so the SGSN 104 must receive at least one SN-PDU 110 wherein the SN-PDU payload includes the UDP/IP layers.

### (2) Managing a USR Profile

The SGSN 104 indicates it supports USR on a PDP Context basis by including the Packet Flow Identifier IE 109 within the PDP Context related NAS message 108 which can be modified to be as shown in FIGS. 6-7.
- Upon receiving the PDP Context related NAS message 108 with such an indication 109, the MTC device 102 which supports USR can enable this feature after sending the SGSN 104 at least one SN-PDU 110 for that PDP Context wherein the UDP/IP layers are included in the SN-PDU payload.
- Upon enabling the USR feature for a given PDP Context, the MTC device 102 retains knowledge of the enabled status for as long as it retains that PDP Context and remains in a cell managed by the SGSN 104 that indicated support for USR during PDP Context activation.

- The SGSN 104 enables USR for that PDP Context upon receiving the SN-PDU 110 wherein the UDP/IP layers are included in the SN-PDU payload.
- Upon enabling USR for a given PDP Context, the SGSN 104 retains knowledge of the corresponding UDP/IP layers for as long as it retains that PDP Context.
- When sending a subsequent SN-PDU 112₁, 112₂...112ₓ, the MTC device 102 sets NSAPI = 2 in the header to indicate the UDP/IP layers have been excluded (i.e., the N-PDU consists of a MTC data packet). This allows the SGSN 104 to re-generate the UDP/IP layers for the subsequent SN-PDUs 112₂, 112₃...112ₓ associated with the corresponding PDP Context and thereby determine how to further process the N-PDUs.
- The SGSN 104 can disable USR by sending the MTC device 102 a PDP context related NAS message 114 (e.g., GPRS Session Management Message 114) where the Packet Flow Identifier IE can be included and set to indicate USR is not supported.
- Upon deciding to perform a Routing Area Update (RAU) due to entering a new Routing Area, the MTC device 102 shall consider the USR to be disabled (for all PDP Contexts) since the RAU may result in establishing a new SGSN 106 which does not yet know the static content of the UDP/IP layers.
- Upon receiving the RAU Accept message 118 indicating the USR feature is enabled, the MTC device 102 enables USR for a given PDP Context by sending the target SGSN 106 at least one SN-PDU 120 for that PDP Context wherein the UDP/IP layers are included in the SN-PDU payload.

### (3) Regenerating the UDP/IP Layers

For the case where the USR feature is enabled for a given PDP Context, the MTC device 102 includes the UDP/IP layers present within at least the first uplink SN-PDU 110 sent to the SGSN 104 after PDP Context activation/modification. Thereafter, the MTC device 102 can omit the UDP/IP layers when sending subsequent SN-PDUs 112₁, 112₂...112ₓ corresponding to that PDP Context to the SGSN 104.
- An indication of when the USR feature has been applied by the MTC device 102 can be provided in the subsequent SN-PDUs 112₁, 112₂...112ₓ with the SNDCP header by using a currently unused value for the NSAPI field (e.g., NSAPI = 2 is available).
- Receiving a NSAPI = 2 in the SNDCP header indicates to the SGSN 104 that the next layer in the protocol stack is the MTC application layer (i.e., the N-PDU consists of a MTC data packet) at which point the SGSN 104 can logically re-create the UDP/IP layers for the corresponding PDP Context and thereby create a new N-PDU having a UDP/IP layer (carrying the MTC data packet as the UDP layer payload) which can then be relayed to the GGSN (not depicted).
- Note; that the size of a SN-PDU is determined by the size of the information field of a LLC-PDU consisting of a LLC UI frame. N201-U determines the maximum size of this information field (see 3GPP TS 44.064 V11.0.0) and may be as large as 1520 octets as established using legacy XID Exchange negotiation (default = 500 octets for LLC SAPI = 3, 5, 9 11). As such, a SN-PDU containing a N-PDU consisting of a MTC data packet (e.g., 100 octets) is typically expected to be mapped into a single LLC PDU. The XID Exchange (XID) is typically done shortly after completion of the PDP Context activated for use by the MTC device 102 but may be done at any time prior to using the corresponding PDP Context. It is also expected PCOMP = 0 will be indicated for SNDCP operation as a result of the XID procedure (i.e., no header compression or data compression is used when sending a N-PDU containing a MTC data packet due to the minimal compression gains that can be expected for small data transmissions). As such, the USR feature described herein can effectively be used to logically realize UDP/IP header compression without the MTC device 102 and the SGSN 104 or 106 having to implement header compression at the SNDCP layer of the protocol stack.

### (4) Changes to Standards to Implement USR feature

3GPP TS 24.008 V12.4.0 specifies the procedures used at the radio interface core network within the 3rd generation mobile telecommunications system and the digital cellular telecommunications system. The following additions to the 3GPP TS 24.008 are necessary to implement at least some embodiments disclosed herein. It should also be noted that while the present embodiments are described in the context of GSM it may also be applied in the context of other radio interfaces, for example LTE and UMTS.
- Modify the spare bit within the Packet Flow Identifier IE to allow a SGSN to send an Activate PDP Context Request Accept, Modify PDP Context Request Accept and Activate Secondary PDP Context Request Accept message that indicates it supports the USR feature for the indicated PDP Context.
- Introduce new MS functionality (e.g., MTC functionality) whereby reception of such a PDP Context related NAS message results in the MS (e.g., MTC device) retaining knowledge of the USR feature status for the corresponding PDP Context for as long as it retains that PDP Context and it remains in a cell managed by the SGSN that indicated support for USR during PDP Context activation.
- Modify the content of a Routing Area Update Accept message to include an indication of whether or not the serving SGSN supports USR.
- 3GPP TS 44.065 V11.0.0 "Mobile Station (MS) - Serving GPRS Support Node (SGSN); Subnetwork Dependent Convergence Protocol (SNDCP)" provides the description of the Subnetwork Dependent Convergence Protocol (SNDCP) for the General Packet Radio Service (GPRS). The modification to this specification would include allowing the NSAPI field in the header of a SN-PDU to be set to an unused value (e.g., NSAPI = 2) to indicate an uplink SN-PDU sent by the MS (e.g., MTC device) is making use of the USR feature (e.g., NSAPI = 2 indicates the UDP/IP layers are not included in the SN-PDU payload but need to be regenerated).

The following additions to the 3GPP TS 24,008 V12.4.0 are necessary to implement at least some embodiments disclosed herein. It should also be noted that while the present embodiments are described in the context of GSM it may also be applied in the context of other radio interfaces, for example LTE.
- Introduce new SGSN functionality where, upon reception of a SN-PDU corresponding to a PDP Context for which it has indicated it supports USR, the SGSN retains knowledge of the UDP/IP layers included that SN-PDU payload (i.e., in this case NSAPI will not be set to 2).
- Introduce new SGSN functionality to support the reception of NSAPI = 2 in the header of an SN-PDU by re-generating the UDP/IP layers for the corresponding PDP Context and processing the N-PDU according to the re-generated UDP/IP layers.

The following is a brief discussion about UDP layers (FIG. 8-UDP Header + Data Field) and IP layers (FIG. 9-IPv6 header) where if desired more details about the UDP and IP layers can be found in the following specifications: RFC 768 and RFC 760.

### UDP Packet format

UDP is a minimal message-oriented Transport Layer protocol that is documented in IETF RFC 768. UDP provides no guarantees to the upper layer protocol for message delivery and the UDP protocol layer retains no state of UDP messages once sent. For this reason, UDP is sometimes referred to as "Unreliable Datagram Protocol". UDP provides application multiplexing (via port numbers) and integrity verification (via checksum) of the header and payload (see FIGURE 8). If transmission reliability is desired, it must be implemented in the user's application or at a lower layer in the protocol stack. As shown in FIGURE 8, the UDP header 802 consists of four fields 804, 806, 808 and 810 each of which is 2 bytes (16 bits). The use of two of these fields namely the Source Port Number field 804 and Checksum field 810 is optional in IPv4. In IPv6 only the source port number field 804 is optional. These fields 804, 806, 808 and 810 are discussed in more detail below:
Source Port Number field 804: This field 804 identifies the sender's port when meaningful and should be assumed to be the port to reply to if needed. If it is not used, then it should be zero. If the source host is the client, then the port number is likely to be an ephemeral port number. If the source host is the server, then the port number is likely to be a well-known port number. This field 804 is expected to be static based on the assumptions provided above and is optional for IPv6.

Destination Port Number field 806: This field 806 identifies the receiver's port and is required. Similar to source port number, if the client is the destination host then the port number will likely be an ephemeral port number and if the destination host is the server then the port number will likely be a well-known port number. This field 806 is expected to be static based on the assumptions provided above.

Length field 808: This field 808 specifies the length in bytes of the entire UDP datagram: header and data. The minimum length is 8 bytes since that is the length of the header. The field size sets a theoretical limit of 65,535 bytes (8 byte header + 65,527 bytes of data) for a UDP datagram. The practical limit for the data length which is imposed by the underlying IPv4 protocol is 65,507 bytes (65,535 - 8 byte UDP header - 20 byte IP header). This field 808 will vary as the length of the application payload varies.

Checksum field 810: This field 810 is used for error-checking of the header and data. If no checksum is generated by the transmitter, then the field uses the value all-zeros. This field 810 is not optional for IPv6. The field 810 could either be made static (i.e., set to all-zeros) or set according header and data content. The field 810 can be set to all-zeros for the case of GSM since the LLC PDUs sent from a UE (e.g., MS, MTC device) to the SGSN already support a checksum field (i.e. the integrity of the application layer payload sent by the MS will be ensured using legacy LLC operation via CRC-24).

### IPv6 Packet format

An Internet Protocol version 6 (IPv6) data packet comprises of two main parts, the header and the payload. The first 40 bytes/octets (40x8 = 320 bits) of an IPv6 packet comprise the IPv6 header 902 (FIGURE 9-note: the present disclosure is not limited to the IPv6 header but could also be implemented with an IPv4 header). As shown in FIGURE 9, the IPv6 header 902 contains the following fields:
Version field 904: This 4-bit field 904 contains the number "6". It indicates the version of the IPv6 protocol. This field 904 is the same size as the IPv4 version field that contains the number "4". However, this field 904 has a limited use because IPv4 and IPv6 packets are not distinguished based on the value in the version field but by the protocol type present in the layer 2 envelope. This field 904 will be static for very long periods of time.

Traffic Class field 906: This 8-bit field 906 can assume different values to enable the source node to differentiate between the packets generated by it by associating different delivery priorities to them. This field 906 is subsequently used by the originating node and the routers to identify the data packets that belong to the same traffic class and distinguish between packets with different priorities. This field 906 is expected to be static based on the assumptions provided above.

Flow Label field 908: This 20-bit field 908 can be used by a source to label a set of packets belonging to the same flow. A flow is uniquely identified by the combination of the source address and of a non-zero flow label. Multiple active flows may exist from a source to a destination as well as traffic that are not associated with any flow (flow label = 0). This field 908 is expected to be set to "0" based on the assumptions provided above.

Payload Length field 910: This 16-bit field 910 contains the length of the data field in octets/bits following the IPv6 packet header (i.e. this will reflect the UDP header length + the application layer payload length). The 16-bit Payload length field 910 puts an upper limit on the maximum packet payload to 64 kilobytes. In case a higher packet payload is required, a jumbo payload extension header is provided in the IPv6 protocol. A jumbo payload (jumbogram) is indicated by the value zero in the Payload Length field 910. Jumbograms are frequently used in supercomputer communications using the IPv6 protocol to transmit heavy data payload. This field 910 will vary as the length of the application payload varies.

Next Header field 912; This 8-bit field 912 identifies the type of header immediately following the IPv6 header and located at the beginning of the data field (payload) of the IPv6 packet. This field 912 usually specifies the transport layer protocol used by a packet's payload. The two most common kinds of Next Headers are TCP and UDP, but many other headers are also possible. The format adopted for this field 912 is the one proposed for IPv4 by RFC 1700. In case of IPv6 protocol, the Next Header field 912 is similar to the IPv4 Protocol field. This field 912 is expected to be static (i.e., set to indicate UDP) based on the assumptions provided above.

Hop Limit field 914: This 8-bit field 914 is decremented by one, by each node (typically a router) that forwards a packet. If the Hop Limit field 914 is decremented to zero, the packet is discarded, The main function of this field 914 is to identify and to discard packets that are stuck in an indefinite loop due to any routing information errors, The 8-bit field 914 also puts an upper limit on the maximum number of links between two IPv6 nodes. In this way, an IPv6 data packet is allowed a maximum of 255 hops before it is eventually discarded. An IPv6 data packet can pass through a maximum of 254 routers before being discarded. This field 914 is expected to be static based on the assumptions provided above.

Source Address field 916 and Destination Address field 918: For IPv6 these fields 916 and 918 are each 16-octets.

In view of the foregoing, the present disclosure describes an example where the SGSN 104 indicates USR support for a PDP context in a NAS message 108 sent to the MTC device 102. The MTC device 102 stores the information and sends a first SN-PDP message 110 including UDP/P layers. The SGSN 104 enables USR for the PDP-context and stores necessary information for the PDP-context. The subsequent SN-PDP messages 112₁, 112₂...112ₓ from the MTC device 102 for that PDP-context comprise an indication, e.g. NSAPI=2, that the UDP/IP layers are excluded. Upon receiving such SN-PDP messages 112₁, 112₂...112ₓ, the SGSN 104 re-generates the UDP/IP layers for the PDP-context using the stored information. Using the NSAPI=2 indicator is but one example of indicators available for indication the use of USR from the MTC device to the SGSN 104. The optimization associated with the USR feature where the MTC device 102 eliminates the repeated inclusion of UDP/IP protocol overhead (46 or 48 octets) for such MTC data packets sent over the radio interface is beneficial due to the fact that MTC devices 102 are expected to commonly transmit small MTC data packets (e.g. 100 octets or less) for a high percentage of MTC transmissions. Thus, given that the volume of small MTC data packets is expected to increase dramatically as MTC devices 102 become rapidly deployed in the near future, the radio interface bandwidth savings that can be realized using embodiments of the USR feature disclosed herein is expected to significantly improve the PS domain traffic capacity (PDCH utilization) of any wireless network supporting the MTC use case as well as contribute to MTC device power savings in that few radio blocks will need to be transmitted.

Although multiple embodiments of the present disclosure have been illustrated in the accompanying Drawings and described in the foregoing Detailed Description, it should be understood that the invention is not limited to the disclosed embodiments, but instead is also capable of numerous rearrangements, modifications and substitutions without departing from the present disclosure that as has been set forth and defined within the following claims.

## Claims

1. A machine type communications, MTC, device (102) configured to implement an uplink stack reduction, USR, feature with a serving node (104), the MTC device comprising:
a processor (504); and,
at least one memory (502) that stores processor-executable instructions, wherein the processor interfaces with the at least one memory to execute the processor-executable instructions, whereby said MTC device is operable to:
receive (202) a message (108, 118) from the serving node when activating a Packet Data Protocol, PDP, context with the serving node, wherein the message comprises an indication (109) which indicates that the serving node supports the USR feature;
send (204), to the serving node, a Sub Network Protocol Data Unit, SN-PDU, (110) having a payload comprising User Datagram Protocol/Internet Protocol, UDP/IP, layers, wherein the SN-PDU is associated with the PDP context with the serving node;
enable (206) the USR feature for the PDP context with the serving node;
store (208) status information indicating the USR feature is enabled for the PDP context with the serving node; and,
send (210), to the serving node, a subsequent SN-PDU (112₁) having a payload which excludes UDP/IP layers, wherein the subsequent SN-PDU is associated with the PDP context with the serving node, wherein the subsequent SN-PDU further comprises a header with a field which indicates that the UDP/IP layers have been excluded therefrom.

2. The MTC device of claim 1, wherein the MTC device is further operable to:
receive (212) a disable indication (114, 124) from the serving node, wherein the disable indication comprises an indication which indicates that the USR feature is disabled for the PDP context with the serving node.

3. The MTC device of claim 1, wherein the field is a Network Service Access Point Identifier, NSAPI, field set to a specific value which indicates that the UDP/IP layers have been excluded therefrom.

4. The MTC device of claim 1, wherein the message (108, 118) is one of:
a PDP context related Non-Access Stratum, NAS, message (108) comprising a packet flow identifier information element which contains the indication which indicates that the serving node supports the USR feature; or
a Routing Area Update, RAU, accept message (118).

5. The MTC device of claim 1, wherein the MTC device is further operable to implement the USR feature with a target serving node (106) upon changing from a cell of the serving node to a new cell of the target serving node as follows:
upon deciding to perform a Routing Area Update, RAU, procedure with the target serving node due to the new cell of the target serving node belonging to a Routing Area which is different from that of the cell of the serving node, consider (214) the USR feature to be disabled for a PDP context with the target serving node;
send (216) a RAU request message (116) to the target serving node;
receive (218) a RAU accept message (118) from the target serving node, wherein the RAU accept message comprises an indication which indicates that the target serving node supports the USR feature;
send (220), to the target serving node, a SN-PDU (120) having a payload comprising UDP/IP layers, wherein the SN-PDU is associated with the PDP context with the target serving node;
enable (222) the USR feature for the PDP context with the target serving node;
store (224) status information indicating the USR feature is enabled for the PDP context with the target serving node; and,
send (226), to the target serving node, a subsequent SN-PDU (122₁) having a payload which excludes UDP/IP layers, wherein the subsequent SN-PDU is associated with the PDP context with the target serving node.

6. The MTC device of claim 1, wherein the MTC device is a mobile station and the serving node is a Service GPRS Support Node, SGSN.

7. A method (200) in a machine type communications, MTC, device (102) for implementing an uplink stack reduction, USR, feature with a serving node (104), the method comprising;
receiving (202) a message (108, 118) from the serving node when activating a Packet Data Protocol, PDP, context with the serving node, wherein the message comprises an indication (109) which indicates that the serving node supports the USR feature;
sending (204), to the serving node, a Sub Network Protocol Data Unit, SN-PDU, (110) having a payload comprising User Datagram Protocol/Internet Protocol, UDP/IP, layers, wherein the SN-PDU is associated with the PDP context with the serving node;
enabling (206) the USR feature for the PDP context with the serving node; storing (208) status information indicating the USR feature is enabled for the PDP context with the serving node; and,
sending (210), to the serving node, a subsequent SN-PDU (112₁) having a payload which excludes UDP/IP layers, wherein the subsequent SN-PDU is associated with the PDP context with the serving node, wherein the subsequent SN-PDU further comprises a header with a field which indicates that the UDP/IP layers have been excluded therefrom.

8. The method of claim 7, further comprising;
receiving (212) a disable indication (114, 124) from the serving node, wherein the disable indication comprises an indication which indicates that the USR feature is disabled for the PDP context with the serving node.

9. The method of claim 7, wherein the field is a Network Service Access Point Identifier, NSAPI, field set to a specific value which indicates that the UDP/IP layers have been excluded therefrom.

10. The method of claim 7, wherein the message (108, 118) is one of:
a PDP context related Non-Access Stratum, NAS, message (108) comprising a packet flow identifier information element which contains the indication which indicates that the serving node supports the USR feature; or
a Routing Area Update, RAU, accept message (118).

11. The method of claim 7, further comprising:
upon deciding to perform a Routing Area Update, RAU, procedure with a target serving node (106) after changing from a cell of the serving node to a new cell of the target serving node wherein the new cell of the target serving node belongs to a Routing Area which is different from that of the cell of the serving node, consider (214) the USR feature to be disabled for a PDP context with the target serving node;
send (216) a RAU request message (116) to the target serving node;
receiving (218) a RAU accept message (118) from the target serving node, wherein the RAU accept message comprises an indication which indicates that the target serving node supports the USR feature;
sending (220), to the target serving node, a SN-PDU (120) having a payload which comprises UDP/IP layers, wherein the SN-PDU is associated with the PDP context with the target serving node;
enabling (222) the USR feature for the PDP context with the target serving node;
storing (224) status information indicating the USR feature is enabled for the PDP context with the target serving node; and,
sending (226), to the target serving node, a subsequent SN-PDU (122₁) having a payload which excludes UDP/IP layers, wherein the subsequent SN-PDU is associated with the PDP context with the target serving node.

12. The method of claim 7, wherein the MTC device is a mobile station and the serving node is a Service GPRS Support Node, SGSN.

13. A serving node (104, 106) configured to implement an uplink stack reduction, USR, feature with a machine type communications, MTC, device (102), the serving node comprising:
a processor (512, 518); and,
at least one memory (510, 516) that stores processor-executable instructions, wherein the processor interfaces with the at least one memory to execute the processor-executable instructions, whereby said serving node is operable to:
send (302, 404) a message (108, 116) to the MTC device when activating a Packet Data Protocol, PDP, context with the MTC device, wherein the message comprises an indication (109) which indicates that the serving node supports the USR feature;
receive (304, 406), from the MTC device, a Sub Network Protocol Data Unit, SN-PDU, (110, 120) having a payload comprising User Datagram Protocol/Internet Protocol, UDP/IP, layers, wherein the SN-PDU is associated with the PDP context with the MTC device;
upon receipt of the SN-PDU, enable (306, 408) the USR feature for the PDP context with the MTC device and store (308,410) information about the UDP/IP layers within the received SN-PDU;
receive (310, 412), from the MTC device, a subsequent SN-PDU (112₁, 122₁) having a payload which excludes UDP/IP layers, wherein the subsequent SN-PDU is associated with the PDP context with the MTC device, wherein the subsequent SN-PDU further comprises a header with a field which indicates that the UDP/IP layers have been excluded therefrom; and,
upon receipt of the subsequent SN-PDU, re-generate (312, 414) UDP/IP layers associated with the subsequent SN-PDU using the stored information to create a Network-Protocol Data Unit, N-PDU, comprising the re-generated UDP/IP layers and the payload of the subsequent SN-PDU.

14. The serving node of claim 13, wherein the serving node is further operable to:
send (314, 416) a disable indicator (114, 124) to the MTC device, wherein the disable indicator comprises an indication which indicates that the USR feature is disabled for the PDP context with the MTC device.

15. The serving node of claim 13, wherein the storing operation further comprises:
store information about the UDP/IP layers from the received SN-PDU for as long as the PDP context with the MTC device is retained.

16. The serving node of claim 13, wherein the field is a Network Service Access Point Identifier, NSAPI, field set to a specific value which indicates that the UDP/IP layers have been excluded therefrom.

17. The serving node of claim 13, wherein the message (108, 116) is one of:
a PDP context related Non-Access Stratum, NAS, message (108) comprising a packet flow identifier information element which contains the indication which indicates that the serving node supports the USR feature; or
a Routing Area Update, RAU, accept message (116).

18. The serving node of claim 13, wherein the MTC device is a mobile station and the serving node is a Service GPRS Support Node, SGSN.

19. A method (300, 400) in a serving node (104, 106) for implementing an uplink stack reduction, USR, feature with a machine type communications, MTC, device (102), the method comprising:
sending (302, 404) a message (108, 116) to the MTC device when activating a Packet Data Protocol, PDP, context with the MTC device, wherein the message comprises an indication (109) which indicates that the serving node supports the USR feature;
receiving (304, 406), from the MTC device, a Sub Network Protocol Data Unit, SN-PDU, (110, 120) having a payload comprising User Datagram Protocol/Internet Protocol, UDP/IP, layers, wherein the SN-PDU is associated with the PDP context with the MTC device;
upon receipt of the SN-PDU, enabling (306, 408) the USR feature for the PDP context with the MTC device and storing (308, 410) information about the UDP/IP layers within the received SN-PDU;
receiving (310, 412), from the MTC device, a subsequent SN-PDU (112₁, 122₁) having a payload which excludes UDP/IP layers, wherein the subsequent SN-PDU is associated with the PDP context with the MTC device, wherein the subsequent SN-PDU further comprises a header with a field which indicates that the UDP/IP layers have been excluded therefrom; and,
upon receipt of the subsequent SN-PDU, re-generating (312, 414) UDP/IP layers associated with the subsequent SN-PDU using the stored information to create a Network-Protocol Data Unit, N-PDU, comprising the re-generated UDP/IP layers and the payload of the subsequent SN-PDU,

20. The method of claim 19, further comprising:
sending (314, 416) a disable indicator (114, 124) to the MTC device, wherein the disable indicator comprises an indication which indicates that the USR feature is disabled for the PDP context with the MTC device.

21. The method of claim 19, wherein the storing operation further comprising:
storing information about the UDP/IP layers from the received SN-PDU for as long as the PDP context with the MTC device is retained.

22. The method of claim 19, wherein the field is a Network Service Access Point Identifier, NSAPI, field set to a specific value which indicates that the UDP/IP layers have been excluded therefrom.

23. The method of claim 19, wherein the message (108, 116) is one of the following:
a PDP context related Non-Access Stratum, NAS, message (108) comprising a packet flow identifier information element which contains the indication which indicates that the serving node supports the USR feature; or
a Routing Area Update, RAU, accept message (116).

24. The method of claim 19, wherein the MTC device is a mobile station and the serving node is a Service GPRS Support Node, SGSN.

## Patentansprüche

1. Maschinenkommunikations (Machine Type Communications, MTC)-Vorrichtung (102), die dafür konfiguriert ist, ein Uplink Stack Reduction (USR)-Funktionsmerkmal in einem bedienenden Knoten (104) zu implementieren, wobei die MTC-Vorrichtung Folgendes umfasst:
einen Prozessor (504); und
mindestens einen Speicher (502), der Prozessorausführbare Instruktionen speichert, wobei der Prozessor mit dem mindestens einen Speicher verbunden ist, um die Prozessor-ausführbaren Instruktionen auszuführen, wobei die MTC-Vorrichtung für Folgendes ausgelegt ist:
Empfangen (202) einer Nachricht (108, 118) von dem bedienenden Knoten, wenn ein Packet Data Protocol (PDP)-Kontext in dem bedienenden Knoten aktiviert wird, wobei die Nachricht einen Hinweis (109) umfasst, der anzeigt, dass der bedienende Knoten das USR-Funktionsmerkmal unterstützt;
Senden (204), zu dem bedienenden Knoten, einer Sub Network Protocol Data Unit (SN-PDU) (110), die Nutzdaten aufweist, die User Datagram Protocol/Internet Protocol (UDP/IP)-Schichten umfassen, wobei die SN-PDU mit dem PDP-Kontext in dem bedienenden Knoten verknüpft ist;
Aktivieren (206) des USR-Funktionsmerkmals für den PDP-Kontext in dem bedienenden Knoten;
Speichern (208) von Statusinformationen, die anzeigen, dass das USR-Funktionsmerkmal für den PDP-Kontext in dem bedienenden Knoten aktiviert ist; und
Senden (210), zu dem bedienenden Knoten, einer anschließenden SN-PDU (112₁), die Nutzdaten aufweist, die UDP/IP-Schichten ausschließen, wobei die anschließende SN-PDU mit dem PDP-Kontext in dem bedienenden Knoten verknüpft ist, wobei die anschließende SN-PDU des Weiteren einen Header mit einem Feld umfasst, das anzeigt, dass die UDP/IP-Schichten davon ausgeschlossen wurden.

2. MTC-Vorrichtung nach Anspruch 1, wobei die MTC-Vorrichtung des Weiteren für Folgendes ausgelegt ist:
Empfangen (212) eines Deaktivierungshinweises (114, 124) von dem bedienenden Knoten, wobei der Deaktivierungshinweis einen Hinweis umfasst, der anzeigt, dass das USR-Funktionsmerkmal für den PDP-Kontext in dem bedienenden Knoten deaktiviert ist.

3. MTC-Vorrichtung nach Anspruch 1, wobei das Feld ein Network Service Access Point Identifier (NSAPI)-Feld ist, das auf einen spezifischen Wert eingestellt ist, der anzeigt, dass die UDP/IP-Schichten davon ausgeschlossen wurden.

4. MTC-Vorrichtung nach Anspruch 1, wobei die Nachricht (108, 118) eines von Folgendem ist:
eine PDP-Kontext-bezogene Non-Access Stratum (NAS)-Nachricht (108), die ein Packet Flow Identifier Information-Element umfasst, das den Hinweis enthält, der anzeigt, dass der bedienende Knoten das USR-Funktionsmerkmal unterstützt; oder
eine Routing Area Update (RAU)-Akzeptanznachricht (118) .

5. MTC-Vorrichtung nach Anspruch 1, wobei die MTC-Vorrichtung des Weiteren dafür geeignet ist, das USR-Funktionsmerkmal in einem bedienenden Zielknoten (106) zu implementieren, wenn von einer Zelle des bedienenden Knotens zu einer neuen Zelle des bedienenden Zielknotens gewechselt wird, wie folgt:
im Fall der Entscheidung, ein Routing Area Update (RAU)-Verfahren in dem bedienenden Zielknoten auszuführen, weil die neue Zelle des bedienenden Zielknotens zu einer Routing Area gehört, die sich von jener der Zelle des bedienenden Knotens unterscheidet, Erachten (214) des USR-Funktionsmerkmals als für einen PDP-Kontext in dem bedienenden Zielknoten deaktiviert;
Senden (216) einer RAU-Anforderungsnachricht (116) zu dem bedienenden Zielknoten;
Empfangen (218) einer RAU-Akzeptanznachricht (118) von dem bedienenden Zielknoten, wobei die RAU-Akzeptanznachricht einen Hinweis umfasst, der anzeigt, dass der bedienende Zielknoten das USR-Funktionsmerkmal unterstützt;
Senden (220), zu dem bedienenden Zielknoten, einer SN-PDU (120), die Nutzdaten aufweist, die UDP/IP-Schichten umfassen, wobei die SN-PDU mit dem PDP-Kontext in dem bedienenden Zielknoten verknüpft ist;
Aktivieren (222) des USR-Funktionsmerkmals für den PDP-Kontext in dem bedienenden Zielknoten;
Speichern (224) von Statusinformationen, die anzeigen, dass das USR-Funktionsmerkmal für den PDP-Kontext in dem bedienenden Zielknoten aktiviert ist; und
Senden (226), zu dem bedienenden Zielknoten, einer anschließenden SN-PDU (122₁), die Nutzdaten aufweist, die UDP/IP-Schichten ausschließen, wobei die anschließende SN-PDU mit dem PDP-Kontext in dem bedienenden Zielknoten verknüpft ist.

6. MTC-Vorrichtung nach Anspruch 1, wobei die MTC-Vorrichtung eine Mobilstation ist und der bedienende Knoten ein Service GPRS Support Node (SGSN) ist.

7. Verfahren (200) in einer Maschinenkommunikations (Machine Type Communications, MTC)-Vorrichtung (102) zum Implementieren eines Uplink Stack Reduction (USR)-Funktionsmerkmals in einem bedienenden Knoten (104), wobei das Verfahren Folgendes umfasst:
Empfangen (202) einer Nachricht (108, 118) von dem bedienenden Knoten, wenn ein Packet Data Protocol (PDP)-Kontext in dem bedienenden Knoten aktiviert wird, wobei die Nachricht einen Hinweis (109) umfasst, der anzeigt, dass der bedienende Knoten das USR-Funktionsmerkmal unterstützt;
Senden (204), zu dem bedienenden Knoten, einer Sub Network Protocol Data Unit (SN-PDU) (110), die Nutzdaten aufweist, die User Datagram Protocol/Internet Protocol (UDP/IP)-Schichten umfassen, wobei die SN-PDU mit dem PDP-Kontext in dem bedienenden Knoten verknüpft ist;
Aktivieren (206) des USR-Funktionsmerkmals für den PDP-Kontext in dem bedienenden Knoten;
Speichern (208) von Statusinformationen, die anzeigen, dass das USR-Funktionsmerkmal für den PDP-Kontext in dem bedienenden Knoten aktiviert ist; und
Senden (210), zu dem bedienenden Knoten, einer anschließenden SN-PDU (112₁), die Nutzdaten aufweist, die UDP/IP-Schichten ausschließen, wobei die anschließende SN-PDU mit dem PDP-Kontext in dem bedienenden Knoten verknüpft ist, wobei die anschließende SN-PDU des Weiteren einen Header mit einem Feld umfasst, das anzeigt, dass die UDP/IP-Schichten davon ausgeschlossen wurden.

8. Verfahren nach Anspruch 7, das des Weiteren Folgendes umfasst:
Empfangen (212) eines Deaktivierungshinweises (114, 124) von dem bedienenden Knoten, wobei der Deaktivierungshinweis einen Hinweis umfasst, der anzeigt, dass das USR-Funktionsmerkmal für den PDP-Kontext in dem bedienenden Knoten deaktiviert ist.

9. Verfahren nach Anspruch 7, wobei das Feld ein Network Service Access Point Identifier (NSAPI)-Feld ist, das auf einen spezifischen Wert eingestellt ist, der anzeigt, dass die UDP/IP-Schichten davon ausgeschlossen wurden.

10. Verfahren nach Anspruch 7, wobei die Nachricht (108, 118) eines von Folgendem ist:
eine PDP-Kontext-bezogene Non-Access Stratum (NAS)-Nachricht (108), die ein Packet Flow Identifier Information-Element umfasst, das den Hinweis enthält, der anzeigt, dass der bedienende Knoten das USR-Funktionsmerkmal unterstützt; oder
eine Routing Area Update (RAU)-Akzeptanznachricht (118) .

11. Verfahren nach Anspruch 7, des Weiteren Folgendes umfasst:
im Fall der Entscheidung, ein Routing Area Update (RAU)-Verfahren in einem bedienenden Zielknoten (106) auszuführen, nachdem von einer Zelle des bedienenden Knotens zu einer neuen Zelle des bedienenden Zielknotens gewechselt wurde, wobei die neue Zelle des bedienenden Zielknotens zu einer Routing Area gehört, die sich von jener der Zelle des bedienenden Knotens unterscheidet, Erachten (214) des USR-Funktionsmerkmals als für einen PDP-Kontext in dem bedienenden Zielknoten deaktiviert;
Senden (216) einer RAU-Anforderungsnachricht (116) zu dem bedienenden Zielknoten;
Empfangen (218) einer RAU-Akzeptanznachricht (118) von dem bedienenden Zielknoten, wobei die RAU-Akzeptanznachricht einen Hinweis umfasst, der anzeigt, dass der bedienende Zielknoten das USR-Funktionsmerkmal unterstützt;
Senden (220), zu dem bedienenden Zielknoten, einer SN-PDU (120), die Nutzdaten aufweist, die UDP/IP-Schichten umfassen, wobei die SN-PDU mit dem PDP-Kontext in dem bedienenden Zielknoten verknüpft ist;
Aktivieren (222) des USR-Funktionsmerkmals für den PDP-Kontext in dem bedienenden Zielknoten;
Speichern (224) von Statusinformationen, die anzeigen, dass das USR-Funktionsmerkmal für den PDP-Kontext in dem bedienenden Zielknoten aktiviert ist; und
Senden (226), zu dem bedienenden Zielknoten, einer anschließenden SN-PDU (122₁), die Nutzdaten aufweist, die UDP/IP-Schichten ausschließen, wobei die anschließende SN-PDU mit dem PDP-Kontext in dem bedienenden Zielknoten verknüpft ist.

12. Verfahren nach Anspruch 7, wobei die MTC-Vorrichtung eine Mobilstation ist und der bedienende Knoten ein Service GPRS Support Node (SGSN) ist.

13. Bedienender Knoten (104, 106), der dafür konfiguriert ist, an Uplink Stack Reduction (USR)-Funktionsmerkmal in einer Maschinenkommunikations (Machine Type Communications, MTC)-Vorrichtung (102) zu implementieren, wobei der bedienende Knoten Folgendes umfasst:
einen Prozessor (512, 518); und
mindestens einen Speicher (510, 516), der Prozessorausführbare Instruktionen speichert, wobei der Prozessor mit dem mindestens einen Speicher verbunden ist, um die Prozessor-ausführbaren Instruktionen auszuführen, wobei der bedienende Knoten für Folgendes ausgelegt ist:
Senden (302, 404) einer Nachricht (108, 116) zu der MTC-Vorrichtung, wenn ein Packet Data Protocol (PDP)-Kontext in der MTC-Vorrichtung aktiviert wird, wobei die Nachricht einen Hinweis (109) umfasst, der anzeigt, dass der bedienende Knoten das USR-Funktionsmerkmal unterstützt;
Empfangen (304, 406), von der MTC-Vorrichtung, einer Sub Network Protocol Data Unit (SN-PDU) (110, 120), die Nutzdaten aufweist, die User Datagram Protocol/Internet Protocol (UDP/IP)-Schichten umfassen, wobei die SN-PDU mit dem PDP-Kontext in der MTC-Vorrichtung verknüpft ist;
nach dem Empfang der SN-PDU, Aktivieren (306, 408) des USR-Funktionsmerkmals für den PDP-Kontext in der MTC-Vorrichtung und Speichern (308, 410) von Informationen über die UDP/IP-Schichten innerhalb der empfangenen SN-PDU;
Empfangen (310, 412), von der MTC-Vorrichtung, einer anschließenden SN-PDU (112₁, 122₁), die Nutzdaten aufweist, die UDP/IP-Schichten ausschließen, wobei die anschließende SN-PDU mit dem PDP-Kontext in der MTC-Vorrichtung verknüpft ist, wobei die anschließende SN-PDU des Weiteren einen Header mit einem Feld umfasst, das anzeigt, dass die UDP/IP-Schichten davon ausgeschlossen wurden; und
nach dem Empfang der anschließenden SN-PDU, erneutes Generieren (312, 414) von UDP/IP-Schichten, die mit der anschließenden SN-PDU verknüpft sind, unter Verwendung der gespeicherten Informationen um eine Network-Protocol Data Unit (N-PDU) zu erzeugen, die die erneut generierten UDP/IP-Schichten und die Nutzdaten der anschließenden SN-PDU umfasst.

14. Bedienender Knoten nach Anspruch 13, wobei der bedienende Knoten des Weiteren für Folgendes geeignet ist:
Senden (314, 416) eines Deaktivierungsindikators (114, 124) zu der MTC-Vorrichtung, wobei der Deaktivierungsindikator einen Hinweis umfasst, der anzeigt, dass das USR-Funktionsmerkmal für den PDP-Kontext in der MTC-Vorrichtung deaktiviert ist.

15. Bedienender Knoten nach Anspruch 13, wobei die Speicheroperation des Weiteren Folgendes umfasst:
Speichern von Informationen über die UDP/IP-Schichten von der empfangenen SN-PDU, solange der PDP-Kontext in der MTC-Vorrichtung behalten wird.

16. Bedienender Knoten nach Anspruch 13, wobei das Feld ein Network Service Access Point Identifier (NSAPI)-Feld ist, das auf einen spezifischen Wert eingestellt ist, der anzeigt, dass die UDP/IP-Schichten davon ausgeschlossen wurden.

17. Bedienender Knoten nach Anspruch 13, wobei die Nachricht (108,116) eines von Folgendem ist:
eine PDP-Kontext-bezogene Non-Access Stratum (NAS)-Nachricht (108), die ein Packet Flow Identifier Informationen-Element umfasst, das den Hinweis enthält, der anzeigt, dass der bedienende Knoten das USR-Funktionsmerkmal unterstützt; oder
eine Routing Area Update (RAU)-Akzeptanznachricht (116) .

18. Bedienender Knoten nach Anspruch 13, wobei die MTC-Vorrichtung eine Mobilstation ist und der bedienende Knoten ein Service GPRS Support Node (SGSN) ist.

19. Verfahren (300, 400) in einem bedienenden Knoten (104, 106) zum Implementieren eines Uplink Stack Reduction (USR)-Funktionsmerkmals in einer Maschinenkommunikations (Machine Type Communications, MTC)-Vorrichtung (102), wobei das Verfahren Folgendes umfasst:
Senden (302, 404) einer Nachricht (108, 116) zu der MTC-Vorrichtung, wenn ein Packet Data Protocol (PDP)-Kontext in der MTC-Vorrichtung aktiviert wird, wobei die Nachricht einen Hinweis (109) umfasst, der anzeigt, dass der bedienende Knoten das USR-Funktionsmerkmal unterstützt;
Empfangen (304, 406), von der MTC-Vorrichtung, einer Sub Network Protocol Data Unit (SN-PDU) (110, 120), die Nutzdaten aufweist, die User Datagram Protocol/Internet Protocol (UDP/IP)-Schichten umfassen, wobei die SN-PDU mit dem PDP-Kontext in der MTC-Vorrichtung verknüpft ist;
nach dem Empfang der SN-PDU, Aktivieren (306, 408) des USR-Funktionsmerkmals für den PDP-Kontext in der MTC-Vorrichtung und Speichern (308, 410) von Informationen über die UDP/IP-Schichten innerhalb der empfangenen SN-PDU;
Empfangen (310, 412), von der MTC-Vorrichtung, einer anschließenden SN-PDU (112₁, 122₁), die Nutzdaten aufweist, die UDP/IP-Schichten ausschließen, wobei die anschließende SN-PDU mit dem PDP-Kontext in der MTC-Vorrichtung verknüpft ist, wobei die anschließende SN-PDU des Weiteren einen Header mit einem Feld umfasst, das anzeigt, dass die UDP/IP-Schichten davon ausgeschlossen wurden; und
nach dem Empfang der anschließenden SN-PDU, erneutes Generieren (312, 414) von UDP/IP-Schichten, die mit der anschließenden SN-PDU verknüpft sind, unter Verwendung der gespeicherten Informationen, um eine Network-Protocol Data Unit (N-PDU) zu erzeugen, die die erneut generierten UDP/IP-Schichten und die Nutzdaten der anschließenden SN-PDU umfasst.

20. Verfahren nach Anspruch 19, das des Weiteren Folgendes umfasst:
Senden (314, 416) eines Deaktivierungsindikators (114, 124) zu der MTC-Vorrichtung, wobei der Deaktivierungsindikator einen Hinweis umfasst, der anzeigt, dass das USR-Funktionsmerkmal für den PDP-Kontext in der MTC-Vorrichtung deaktiviert ist.

21. Verfahren nach Anspruch 19, wobei die Speicheroperation des Weiteren Folgendes umfasst:
Speichern von Informationen über die UDP/IP-Schichten von der empfangenen SN-PDU, solange der PDP-Kontext in der MTC-Vorrichtung behalten wird.

22. Verfahren nach Anspruch 19, wobei das Feld ein Network Service Access Point Identifier (NSAPI)-Feld ist, das auf einen spezifischen Wert eingestellt ist, der anzeigt, dass die UDP/IP-Schichten davon ausgeschlossen wurden.

23. Verfahren nach Anspruch 19, wobei die Nachricht (108, 116) eines von Folgendem ist:
eine PDP-Kontext-bezogene Non-Access Stratum (NAS)-Nachricht (108), die ein Packet Flow Identifier Informationen-Element umfasst, das den Hinweis enthält, der anzeigt, dass der bedienende Knoten das USR-Funktionsmerkmal unterstützt; oder
eine Routing Area Update (RAU)-Akzeptanznachricht (116) .

24. Verfahren nach Anspruch 19, wobei die MTC-Vorrichtung eine Mobilstation ist und der bedienende Knoten ein Service GPRS Support Node (SGSN) ist.

## Revendications

1. Dispositif de communication de type machine, MTC, (102) configuré pour mettre en oeuvre une caractéristique de réduction de pile de liaison montante, USR, avec un noeud de desserte (104), le dispositif MTC comprenant :
un processeur (504) ; et
au moins une mémoire (502) qui mémorise des instructions exécutables par processeur, dans lequel le processeur est en interface avec l'au moins une mémoire pour exécuter les instructions exécutables par processeur, de telle manière que ledit dispositif MTC soit utilisable pour effectuer :
la réception (202) d'un message (108, 118) en provenance du noeud de desserte lors de l'activation d'un contexte de protocole de données en paquets, PDP, avec le noeud de desserte, dans lequel le message comprend une indication (109) qui indique que le noeud de desserte prend en charge la caractéristique USR ;
l'envoi (204), au noeud de desserte, d'une unité de données de protocole de sous-réseau, SN-PDU, (110) ayant une charge utile comprenant des couches de protocole de datagrammes d'utilisateur/protocole Internet, UDP/IP, dans lequel la SN-PDU est associée au contexte PDP avec le noeud de desserte ;
l'activation (206) de la caractéristique USR pour le contexte PDP avec le noeud de desserte ;
la mémorisation (208) d'informations de statut indiquant que la caractéristique USR est activée pour le contexte PDP avec le noeud de desserte ; et
l'envoi (210), au noeud de desserte, d'une SN-PDU suivante (112₁) ayant une charge utile excluant des couches UDP/IP, dans lequel la SN-PDU suivante est associée au contexte PDP avec le noeud de desserte, dans lequel la SN-PDU suivante comprend en outre un en-tête avec un champ qui indique que les couches UDP/IP ont été exclues de celui-ci.

2. Dispositif MTC selon la revendication 1, dans lequel le dispositif MTC est en outre utilisable pour effectuer :
la réception (212) d'une indication de désactivation (114, 124) en provenance du noeud de desserte, dans lequel l'indication de désactivation comprend une indication qui indique que la caractéristique USR est désactivée pour le contexte PDP avec le noeud de desserte.

3. Dispositif MTC selon la revendication 1, dans lequel le champ est un champ d'identifiant de point d'accès de desserte de réseau, NSAPI, réglé à une valeur spécifique qui indique que les couches UDP/IP ont été exclues de celui-ci.

4. Dispositif MTC selon la revendication 1, dans lequel le message (108, 118) est l'un de :
un message de couche sans accès, NAS, lié au contexte PDP (108) comprenant un élément d'information d'identifiant de flux de paquets qui contient l'indication indiquant que le noeud de desserte prend en charge la caractéristique USR ; ou
un message d'acceptation de mise à jour de zone d'acheminement, RAU, (118).

5. Dispositif MTC selon la revendication 1, dans lequel le dispositif MTC est en outre utilisable pour mettre en oeuvre la caractéristique USR avec un noeud de desserte cible (106) lors du changement d'une cellule du noeud de desserte à une nouvelle cellule du noeud de desserte cible, comme suit :
lors de la décision d'effectuer une procédure de mise à jour de zone d'acheminement, RAU, avec le noeud de desserte cible parce que la nouvelle cellule du noeud de desserte cible appartient à une zone d'acheminement qui est différente de celle de la cellule du noeud de desserte, la prise en compte (214) de la caractéristique USR à désactiver pour un contexte PDP avec le noeud de desserte cible ;
l'envoi (216) d'un message de demande RAU (116) au noeud de desserte cible ;
la réception (218) d'un message d'acceptation RAU (118) en provenance du noeud de desserte cible, dans lequel le message d'acceptation RAU comprend une indication indiquant que le noeud de desserte cible prend en charge la caractéristique USR ;
l'envoi (220), au noeud de desserte cible, d'une SN-PDU (120) ayant une charge utile comprenant des couches UDP/IP, dans lequel la SN-PDU est associée au contexte PDP avec le noeud de desserte cible ;
l'activation (222) de la caractéristique USR pour le contexte PDP avec le noeud de desserte cible ;
la mémorisation (224) d'informations de statut indiquant que la caractéristique USR est activée pour le contexte PDP avec le noeud de desserte cible ; et
l'envoi (226), au noeud de desserte cible, d'une SN-PDU suivante (122₁) ayant une charge utile qui exclut des couches UDP/IP, dans lequel la SN-PDU suivante est associée au contexte PDP avec le noeud de desserte cible.

6. Dispositif MTC selon la revendication 1, dans lequel le dispositif MTC est une station mobile et le noeud de desserte est un noeud de prise en charge de GPRS de desserte, SGSN.

7. Procédé (200) dans un dispositif de communication de type machine, MTC, (102) pour mettre en oeuvre une caractéristique de réduction de pile de liaison montante, USR, avec un noeud de desserte (104), le procédé comprenant :
la réception (202) d'un message (108, 118) en provenance du noeud de desserte lors de l'activation d'un contexte de protocole de données en paquets, PDP, avec le noeud de desserte, dans lequel le message comprend une indication (109) qui indique que le noeud de desserte prend en charge la caractéristique USR ;
l'envoi (204), au noeud de desserte, d'une unité de données de protocole de sous-réseau, SN-PDU, (110) ayant une charge utile comprenant des couches de protocole de datagrammes d'utilisateur/protocole Internet, UDP/IP, dans lequel la SN-PDU est associée au contexte PDP avec le noeud de desserte ;
l'activation (206) de la caractéristique USR pour le contexte PDP avec le noeud de desserte ;
la mémorisation (208) d'informations de statut indiquant que la caractéristique USR est activée pour le contexte PDP avec le noeud de desserte ; et
l'envoi (210), au noeud de desserte, d'une SN-PDU suivante (112₁) ayant une charge utile excluant des couches UDP/IP, dans lequel la SN-PDU suivante est associée au contexte PDP avec le noeud de desserte, dans lequel la SN-PDU suivante comprend en outre un en-tête avec un champ qui indique que les couches UDP/IP ont été exclues de celui-ci.

8. Procédé selon la revendication 7, comprenant en outre :
la réception (212) d'une indication de désactivation (114, 124) en provenance du noeud de desserte, dans lequel l'indication de désactivation comprend une indication qui indique que la caractéristique USR est désactivée pour le contexte PDP avec le noeud de desserte.

9. Procédé selon la revendication 7, dans lequel le champ est un champ d'identifiant de point d'accès de desserte de réseau, NSAPI, réglé à une valeur spécifique qui indique que les couches UDP/IP ont été exclues de celui-ci.

10. Procédé selon la revendication 7, dans lequel le message (108, 118) est l'un de :
un message de couche sans accès, NAS, lié au contexte PDP (108) comprenant un élément d'information d'identifiant de flux de paquets qui contient l'indication indiquant que le noeud de desserte prend en charge la caractéristique USR ; ou
un message d'acceptation de mise à jour de zone d'acheminement, RAU, (118).

11. Procédé selon la revendication 7, comprenant en outre :
lors de la décision d'effectuer une procédure de mise à jour de zone d'acheminement, RAU, avec un noeud de desserte cible (106) après le changement d'une cellule du noeud de desserte à une nouvelle cellule du noeud de desserte cible, dans lequel la nouvelle cellule du noeud de desserte cible appartient à une zone d'acheminement qui est différente de celle de la cellule du noeud de desserte, la prise en compte (214) de la caractéristique USR à désactiver pour un contexte PDP avec le noeud de desserte cible ;
l'envoi (216) d'un message de demande RAU (116) au noeud de desserte cible ;
la réception (218) d'un message d'acceptation RAU (118) en provenance du noeud de desserte cible, dans lequel le message d'acceptation RAU comprend une indication indiquant que le noeud de desserte cible prend en charge la caractéristique USR ;
l'envoi (220), au noeud de desserte cible, d'une SN-PDU (120) ayant une charge utile comprenant des couches UDP/IP, dans lequel la SN-PDU est associée au contexte PDP avec le noeud de desserte cible ;
l'activation (222) de la caractéristique USR pour le contexte PDP avec le noeud de desserte cible ;
la mémorisation (224) d'informations de statut indiquant que la caractéristique USR est activée pour le contexte PDP avec le noeud de desserte cible ; et
l'envoi (226), au noeud de desserte cible, d'une SN-PDU suivante (122₁) ayant une charge utile qui exclut des couches UDP/IP, dans lequel la SN-PDU suivante est associée au contexte PDP avec le noeud de desserte cible.

12. Procédé selon la revendication 7, dans lequel le dispositif MTC est une station mobile et le noeud de desserte est un noeud de prise en charge de GPRS de desserte, SGSN.

13. Noeud de desserte (104, 106) configuré pour mettre en oeuvre une caractéristique de réduction de pile de liaison montante, USR, avec un dispositif de communication de type machine, MTC, (102), le noeud de desserte comprenant :
un processeur (512, 518) ; et
au moins une mémoire (510, 516) qui mémorise des instructions exécutables par processeur, dans lequel le processeur est en interface avec l'au moins une mémoire pour exécuter les instructions exécutables par processeur, de telle manière que ledit noeud de desserte soit utilisable pour effectuer :
l'envoi (302, 404) d'un message (108, 116) au dispositif MTC lors de l'activation d'un contexte de protocole de données en paquets, PDP, avec le dispositif MTC, dans lequel le message comprend une indication (109) qui indique que le noeud de desserte prend en charge la caractéristique USR ;
la réception (304, 406), en provenance du dispositif MTC, d'une unité de données de protocole de sous-réseau, SN-PDU, (110, 120) ayant une charge utile comprenant des couches de protocole de datagrammes d'utilisateur/protocole Internet, UDP/IP, dans lequel la SN-PDU est associée au contexte PDP avec le dispositif MTC ;
lors de la réception de la SN-PDU, l'activation (306, 408) de la caractéristique USR pour le contexte PDP avec le dispositif MTC et la mémorisation (308, 410) d'informations relatives aux couches UDP/IP à l'intérieur de la SN-PDU reçue ;
la réception (310, 412), en provenance du dispositif MTC, d'une SN-PDU suivante (112₁, 122₁) ayant une charge utile excluant des couches UDP/IP, dans lequel la SN-PDU suivante est associée au contexte PDP avec le dispositif MTC, dans lequel la SN-PDU suivante comprend en outre un en-tête avec un champ qui indique que les couches UDP/IP ont été exclues de celui-ci ; et
lors de la réception de la SN-PDU suivante, la régénération (312, 414) des couches UDP/IP associées à la SN-PDU en utilisant les informations mémorisées pour créer une unité de données de protocole de réseau, N-PDU, comprenant les couches UDP/IP régénérées et la charge utile de la SN-PDU suivante.

14. Noeud de desserte selon la revendication 13, dans lequel le noeud de desserte est en outre utilisable pour effectuer :
l'envoi (314, 416) d'un indicateur de désactivation (114, 124) au dispositif MTC, dans lequel l'indicateur de désactivation comprend une indication qui indique que la caractéristique USR est désactivée pour le contexte PDP avec le dispositif MTC.

15. Noeud de desserte selon la revendication 13, dans lequel l'opération de mémorisation comprend en outre :
la mémorisation d'informations relatives aux couches UDP/IP provenant de la SN-PDU reçue pendant la durée de conservation du contexte PDP avec le dispositif MTC.

16. Noeud de desserte selon la revendication 13, dans lequel le champ est un champ d'identifiant de point d'accès de desserte de réseau, NSAPI, réglé à une valeur spécifique qui indique que les couches UDP/IP ont été exclues de celui-ci.

17. Noeud de desserte selon la revendication 13, dans lequel le message (108, 116) est l'un de :
un message de couche sans accès, NAS, lié au contexte PDP (108) comprenant un élément d'information d'identifiant de flux de paquets qui contient l'indication indiquant que le noeud de desserte prend en charge la caractéristique USR ; ou
un message d'acceptation de mise à jour de zone d'acheminement, RAU, (116).

18. Noeud de desserte selon la revendication 13, dans lequel le dispositif MTC est une station mobile et le noeud de desserte est un noeud de prise en charge de GPRS de desserte, SGSN.

19. Procédé (300, 400) dans un noeud de desserte (104, 106) pour mettre en oeuvre une caractéristique de réduction de pile de liaison montante, USR, avec un dispositif de communication de type machine, MTC, (102), le procédé comprenant :
l'envoi (302, 404) d'un message (108, 116) au dispositif MTC lors de l'activation d'un contexte de protocole de données en paquets, PDP, avec le dispositif MTC, dans lequel le message comprend une indication (109) qui indique que le noeud de desserte prend en charge la caractéristique USR ;
la réception (304, 406), en provenance du dispositif MTC, d'une unité de données de protocole de sous-réseau, SN-PDU, (110, 120) ayant une charge utile comprenant des couches de protocole de datagrammes d'utilisateur/protocole Internet, UDP/IP, dans lequel la SN-PDU est associée au contexte PDP avec le dispositif MTC ;
lors de la réception de la SN-PDU, l'activation (306, 408) de la caractéristique USR pour le contexte PDP avec le dispositif MTC et la mémorisation (308, 410) d'informations relatives aux couches UDP/IP à l'intérieur de la SN-PDU reçue ;
la réception (310, 412), en provenance du dispositif MTC, d'une SN-PDU suivante (112₁, 122₁) ayant une charge utile excluant des couches UDP/IP, dans lequel la SN-PDU suivante est associée au contexte PDP avec le dispositif MTC, dans lequel la SN-PDU suivante comprend en outre un en-tête avec un champ qui indique que les couches UDP/IP ont été exclues de celui-ci ; et
lors de la réception de la SN-PDU suivante, la régénération (312, 414) des couches UDP/IP associées à la SN-PDU en utilisant les informations mémorisées pour créer une unité de données de protocole de réseau, N-PDU, comprenant les couches UDP/IP régénérées et la charge utile de la SN-PDU suivante.

20. Procédé selon la revendication 19, comprenant en outre :
l'envoi (314, 416) d'un indicateur de désactivation (114, 124) au dispositif MTC, dans lequel l'indicateur de désactivation comprend une indication qui indique que la caractéristique USR est désactivée pour le contexte PDP avec le dispositif MTC.

21. Procédé selon la revendication 19, dans lequel l'opération de mémorisation comprend en outre :
la mémorisation d'informations relatives aux couches UDP/IP provenant de la SN-PDU reçue pendant la durée de conservation du contexte PDP avec le dispositif MTC.

22. Procédé selon la revendication 19, dans lequel le champ est un champ d'identifiant de point d'accès de desserte de réseau, NSAPI, réglé à une valeur spécifique qui indique que les couches UDP/IP ont été exclues de celui-ci.

23. Procédé selon la revendication 19, dans lequel le message (108, 116) est l'un de :
un message de couche sans accès, NAS, lié au contexte PDP (108) comprenant un élément d'information d'identifiant de flux de paquets qui contient l'indication indiquant que le noeud de desserte prend en charge la caractéristique USR ; ou
un message d'acceptation de mise à jour de zone d'acheminement, RAU, (116).

24. Procédé selon la revendication 19, dans lequel le dispositif MTC est une station mobile et le noeud de desserte est un noeud de prise en charge de GPRS de desserte, SGSN.
